# EUROPEAN PATENT APPLICATION

(11) **EP 4 336 884 A1**
(43) Date of publication of application: **13.03.2024**
(21) Application number: 22814914.2
(22) Date of filing: 22.04.2022
(51) Int. Cl.: H04W 24/02, H04W 72/04

(54) **COMMUNICATION METHOD AND COMMUNICATION APPARATUS**

(30) Priority: 31.05.2021 CN 202110597946
(71) Applicant: Huawei Technologies Co., Ltd., Shenzhen, Guangdong 518129 (CN)
(72) Inventor: YOU, Chunhua, Shenzhen, Guangdong 518129 (CN); XU, Xiaoying, Shenzhen, Guangdong 518129 (CN)
(74) Representative: Pfenning, Meinig & Partner mbB
(86) International application number: PCT/CN2022/088341
(87) International publication number: WO 2022/252867

(57) **Abstract**

This application provides a communication method and apparatus. The method is applied to a terminal device, and the method includes: receiving first small data transmission SDT configuration information from a first network device, where the first SDT configuration information corresponds to a first network slice; and sending a radio resource control RRC resume request message and data of the first network slice to the first network device based on the first SDT configuration information. According to this application, a network slice-based SDT solution can be implemented, so that requirements of different users are met.

## Description

This application claims priority to Chinese Patent Application No. 202110597946.0, filed with the China National Intellectual Property Administration on May 31, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

In a communication system, a terminal device in a non-connected state (an idle state or an inactive state) may perform data transmission without radio resource control (radio resource control, RRC) state switching. This data transmission mechanism is small data transmission (small data transmission, SDT). However, currently, no network slice-based SDT solution is proposed, and requirements of different users cannot be met.

### SUMMARY

This application provides a communication method, to implement a network slice-based SDT solution, and meet requirements of different users.

According to a first aspect, a communication method is provided. The method is applied to a terminal device, and the method includes: receiving first SDT configuration information from a first network device, where the first SDT configuration information corresponds to a first network slice; and sending a radio resource control RRC resume request message and data of the first network slice to the first network device based on the first SDT configuration information.

Based on the foregoing technical solution, the first network device sends SDT configuration information (for example, the first SDT configuration information) at a granularity of the network slice to the terminal device, so that the terminal device can perform network slice-based SDT transmission (for example, send the data of the first network slice) based on the SDT configuration information at a granularity of the network slice. In this way, different service treatments can be provided for different users, requirements of different users are met, and user experience is improved.

With reference to the first aspect, in some implementations of the first aspect, the first SDT configuration information includes an identifier of the first network slice or an identifier of a first network slice group, and the first network slice group includes the first network slice.

Based on the foregoing technical solution, the identifier of the first network slice or the identifier of the first network slice group is carried in the first SDT configuration information, so that the terminal device can determine, based on the identifier of the first network slice or the identifier of the first network slice group, that the first SDT configuration information corresponds to the first network slice. In this way, a network slice-based SDT solution is implemented.

With reference to the first aspect, in some implementations of the first aspect, the method further includes: receiving first indication information from the first network device. The first indication information indicates that the first SDT configuration information corresponds to the first network slice or a first network slice group, and the first network slice group includes the first network slice.

Based on the foregoing technical solution, the first network device sends the first indication information to the terminal device, so that the terminal device can determine, based on the first indication information, that the first SDT configuration information corresponds to the first network slice. In this way, a network slice-based SDT solution is implemented.

With reference to the first aspect, in some implementations of the first aspect, the first SDT configuration information corresponds to a first radio bearer (radio bearer, RB), the first RB corresponds to the first network slice, and the data of the first network slice is data of the first RB.

Based on the foregoing technical solution, the first network device may send SDT configuration information (for example, the first SDT configuration information) at a granularity of the RB to the terminal device, so that the terminal device can perform RB-based SDT transmission (for example, send the data of the first RB corresponding to the first network slice) based on the SDT configuration information at a granularity of the RB. In this way, different service treatments can be provided for different users, requirements of different users are met, and user experience is improved.

With reference to the first aspect, in some implementations of the first aspect, the first SDT configuration information includes an identifier of the first RB.

Based on the foregoing technical solution, the identifier of the first RB is carried in the first SDT configuration information, so that the terminal device can determine, based on the identifier of the first RB, that the first SDT configuration information corresponds to the first RB. In this way, an RB-based SDT solution is implemented.

With reference to the first aspect, in some implementations of the first aspect, the method further includes: receiving second indication information from the first network device. The second indication information indicates that the first SDT configuration information corresponds to the first RB.

Based on the foregoing technical solution, the first network device sends the second indication information to the terminal device, so that the terminal device can determine, based on the second indication information, that the first SDT configuration information corresponds to the first RB. In this way, an RB-based SDT solution is implemented.

With reference to the first aspect, in some implementations of the first aspect, the method further includes: receiving second SDT configuration information from the first network device. The second SDT configuration information corresponds to a second RB, the second RB is different from the first RB, the second RB corresponds to the first network slice, and a resource indicated by the first SDT configuration information is different from that indicated by the second SDT configuration information.

Based on the foregoing technical solution, the first network device sends, to the terminal device, SDT configuration information corresponding to different RBs, and resources indicated by the SDT configuration information corresponding to the different RBs are different. In this way, an RB-based SDT solution can be implemented.

With reference to the first aspect, in some implementations of the first aspect, the first SDT configuration information includes at least one of the following information: a data amount threshold, a reference signal received power (reference signal received power, RSRP) threshold, a security parameter, a configured grant (configure grant, CG) time domain resource, a CG frequency domain resource, a CG demodulation reference signal (demodulation reference signal, DMRS) configuration, an identifier of a synchronization signal and physical broadcast channel (physical broadcast channel block, PBCH) block, search space or a control resource set, a preamble, a random access channel time-frequency resource, a physical uplink shared channel (physical uplink shared channel, PUSCH) time-frequency resource of a random access message A, a PUSCH DMRS configuration of the random access message A, and an uplink carrier selection threshold.

With reference to the first aspect, in some implementations of the first aspect, the first SDT configuration information includes the data amount threshold, and the sending an RRC resume request message and data of the first network slice to the first network device based on the first SDT configuration information includes: when a sum of data amounts of network slices corresponding to the first SDT configuration information is less than or equal to the data amount threshold, sending the RRC resume request message and the data of the first network slice to the first network device. The network slice corresponding to the first SDT configuration information includes the first network slice.

With reference to the first aspect, in some implementations of the first aspect, the first SDT configuration information includes the RSRP threshold, and the sending an RRC resume request message and data of the first network slice to the first network device based on the first SDT configuration information includes: when an RSRP of at least one synchronization signal and PBCH block corresponding to the first SDT configuration information is greater than or equal to the RSRP threshold, sending the RRC resume request message and the data of the first network slice to the first network device.

Based on the foregoing technical solution, the terminal device determines, based on the RSRP of the at least one synchronization signal and PBCH block corresponding to the first SDT configuration information, whether to trigger an SDT process. In this way, network slices can be isolated in different synchronization signal and PBCH blocks, and requirements of different users are met.

With reference to the first aspect, in some implementations of the first aspect, the first SDT configuration information includes the security parameter, and the security parameter includes a next hop chaining counter (next hop chaining counter, NCC). The method further includes: encrypting the data of the first network slice by using a key. The key is determined based on the NCC. The sending an RRC resume request message and data of the first network slice to the first network device based on the first SDT configuration information includes: sending the RRC resume request message and encrypted data of the first network slice to the first network device.

Based on the foregoing technical solution, the terminal device determines the key based on the NCC, and encrypts the data of the first network slice by using the key, to implement a secure network slice-based SDT solution.

With reference to the first aspect, in some implementations of the first aspect, the method further includes: resuming a suspended RB corresponding to the first network slice or the first network slice group. The first network slice group includes the first network slice, and the suspended RB corresponds to the data of the first network slice.

With reference to the first aspect, in some implementations of the first aspect, the method further includes: not resuming an RB corresponding to a third network slice or a third network slice group. The third network slice is different from the first network slice, and the third network slice group is different from the first network slice group.

With reference to the first aspect, in some implementations of the first aspect, the method further includes: sending third indication information to the first network device. The third indication information indicates that data of the third network slice arrives, and the third indication information, the RRC resume request message, and the data of the first network slice are carried in a same message.

With reference to the first aspect, in some implementations of the first aspect, the first SDT configuration information is included in an RRC release message or a system message.

According to a second aspect, a communication method is provided. The method is applied to a first network device, and the method includes: sending first SDT configuration information to a terminal device, where the first SDT configuration information corresponds to a first network slice; receiving an RRC resume request message and data from the terminal device; and determining, based on the first SDT configuration information, that the data is data of the first network slice.

Based on the foregoing technical solution, the first network device sends SDT configuration information (for example, the first SDT configuration information) at a granularity of the network slice to the terminal device, so that the terminal device can perform network slice-based SDT transmission (for example, send the data of the first network slice) based on the SDT configuration information at a granularity of the network slice. In this way, different service treatments can be provided for different users, requirements of different users are met, and user experience is improved.

With reference to the second aspect, in some implementations of the second aspect, the first SDT configuration information includes an identifier of the first network slice or an identifier of a first network slice group, and the first network slice group includes the first network slice.

Based on the foregoing technical solution, the identifier of the first network slice or the identifier of the first network slice group is carried in the first SDT configuration information, so that the terminal device can determine, based on the identifier of the first network slice or the identifier of the first network slice group, that the first SDT configuration information corresponds to the first network slice. In this way, a network slice-based SDT solution is implemented.

With reference to the second aspect, in some implementations of the second aspect, the method further includes: sending first indication information to the terminal device. The first indication information indicates that the first SDT configuration information corresponds to the first network slice or a first network slice group, and the first network slice group includes the first network slice.

Based on the foregoing technical solution, the first network device sends the first indication information to the terminal device, so that the terminal device can determine, based on the first indication information, that the first SDT configuration information corresponds to the first network slice. In this way, a network slice-based SDT solution is implemented.

With reference to the second aspect, in some implementations of the second aspect, the first SDT configuration information corresponds to a first RB, and the first RB corresponds to the first network slice. The determining, based on the first SDT configuration information, that the data is data of the first network slice includes: determining, based on the first SDT configuration information, that the data is data of the first RB.

Based on the foregoing technical solution, the first network device may send SDT configuration information (for example, the first SDT configuration information) at a granularity of the RB to the terminal device, so that the terminal device can perform RB-based SDT transmission (for example, send the data of the first RB corresponding to the first network slice) based on the SDT configuration information at a granularity of the RB. In this way, different service treatments can be provided for different users, requirements of different users are met, and user experience is improved.

With reference to the second aspect, in some implementations of the second aspect, the first SDT configuration information includes an identifier of the first RB.

Based on the foregoing technical solution, the identifier of the first RB is carried in the first SDT configuration information, so that the terminal device can determine, based on the identifier of the first RB, that the first SDT configuration information corresponds to the first RB. In this way, an RB-based SDT solution is implemented.

With reference to the second aspect, in some implementations of the second aspect, the method further includes: sending second indication information to the terminal device. The second indication information indicates that the first SDT configuration information corresponds to the first RB.

Based on the foregoing technical solution, the first network device sends the second indication information to the terminal device, so that the terminal device can determine, based on the second indication information, that the first SDT configuration information corresponds to the first RB. In this way, an RB-based SDT solution is implemented.

With reference to the second aspect, in some implementations of the second aspect, the method further includes: sending second SDT configuration information to the terminal device. The second SDT configuration information corresponds to a second RB, the second RB is different from the first RB, the second RB corresponds to the first network slice, and a resource indicated by the second SDT configuration information is different from that indicated by the first SDT configuration information.

Based on the foregoing technical solution, the first network device sends, to the terminal device, SDT configuration information corresponding to different RBs, and resources indicated by the SDT configuration information corresponding to the different RBs are different. In this way, an RB-based SDT solution can be implemented.

With reference to the second aspect, in some implementations of the second aspect, the first SDT configuration information includes at least one of the following information: a data amount threshold, an RSRP threshold, a security parameter, a CG time domain resource, a CG frequency domain resource, a CG DMRS configuration, an identifier of a synchronization signal and PBCH block, search space or a control resource set, a preamble, a random access channel time-frequency resource, a PUSCH time-frequency resource, a PUSCH DMRS configuration, and an uplink carrier selection threshold.

With reference to the second aspect, in some implementations of the second aspect, the first SDT configuration information includes the security parameter, the security parameter includes an NCC, and the method further includes: decrypting the data of the first network slice by using a key. The key is determined based on the NCC.

Based on the foregoing technical solution, the first network device determines the key based on the NCC, and decrypts the data of the first network slice by using the key, to implement a secure network slice-based SDT solution.

With reference to the second aspect, in some implementations of the second aspect, the method further includes: sending a request message to a second network device, where the request message is used to request a context of the terminal device, and the request message includes assistance information of the first network slice; and receiving a response message from the second network device, where the response message includes the context of the terminal device or a tunnel address for uplink data forwarding.

Based on the foregoing technical solution, the first network device sends the assistance information of the first network slice to the second network device, so that the second network device determines, based on the assistance information of the first network slice, whether to perform anchor relocation (anchor relocation). In this way, a network slice-based SDT solution is implemented.

With reference to the second aspect, in some implementations of the second aspect, the assistance information of the first network slice includes one or more of the following: the identifier of the first network slice, first admission information, a data amount of the first network slice, and priority information of the first network slice. The first admission information indicates whether the first network device can admit the first network slice.

With reference to the second aspect, in some implementations of the second aspect, the method further includes: receiving third indication information from the terminal device. The third indication information indicates that data of a third network slice arrives. The request message further includes assistance information of the third network slice.

Based on the foregoing technical solution, the first network device sends the assistance information of the third network slice to the second network device, so that the second network device determines, based on the assistance information of the third network slice, whether to perform anchor relocation (anchor relocation). In this way, a network slice-based SDT solution is implemented.

With reference to the second aspect, in some implementations of the second aspect, the assistance information of the third network slice includes one or more of the following: second admission information, the third indication information, an identifier of the third network slice, and priority information of the third network slice. The second admission information indicates whether the first network device can admit the third network slice.

According to a third aspect, a communication method is provided. The method is applied to a second network device, and the method includes: receiving a request message from a first network device, where the request message is used to request a context of a terminal device, the request message includes assistance information of a first network slice, and the first network slice is a network slice for initiating SDT by the terminal device; and determining, based on the assistance information of the first network slice, whether to perform anchor relocation.

Based on the foregoing technical solution, the first network device sends the assistance information of the first network slice to the second network device, so that the second network device determines, based on the assistance information of the first network slice, whether to perform anchor relocation. In this way, a network slice-based SDT solution is implemented.

With reference to the third aspect, in some implementations of the third aspect, the assistance information of the first network slice includes one or more of the following: an identifier of the first network slice, first admission information, a data amount of the first network slice, and priority information of the first network slice. The first admission information indicates whether the first network device can admit the first network slice.

With reference to the third aspect, in some implementations of the third aspect, the request message further includes assistance information of a third network slice, the third network slice is a network slice in which data arrives at the terminal device, and the third network slice is different from the first network slice. The determining, based on the assistance information of the first network slice, whether to perform anchor relocation includes: determining, based on the assistance information of the first network slice and the assistance information of the third network slice, whether to perform anchor relocation.

Based on the foregoing technical solution, the first network device sends the assistance information of the third network slice to the second network device, so that the second network device determines, based on the assistance information of the third network slice, whether to perform anchor relocation. In this way, a network slice-based SDT solution is implemented.

With reference to the third aspect, in some implementations of the third aspect, the assistance information of the third network slice includes one or more of the following: second admission information, third indication information, an identifier of the third network slice, and priority information of the third network slice. The second admission information indicates whether the first network device can admit the third network slice, and the third indication information indicates that data of the third network slice arrives.

According to a fourth aspect, a communication apparatus is provided. The communication apparatus includes a transceiver unit. The transceiver unit is configured to receive first SDT configuration information from a first network device, where the first SDT configuration information corresponds to a first network slice; and the transceiver unit is further configured to send a radio resource control RRC resume request message and data of the first network slice to the first network device based on the first SDT configuration information.

With reference to the fourth aspect, in some implementations of the fourth aspect, the first SDT configuration information includes an identifier of the first network slice or an identifier of a first network slice group, and the first network slice group includes the first network slice.

With reference to the fourth aspect, in some implementations of the fourth aspect, the transceiver unit is further configured to receive first indication information from the first network device. The first indication information indicates that the first SDT configuration information corresponds to the first network slice or a first network slice group, and the first network slice group includes the first network slice.

With reference to the fourth aspect, in some implementations of the fourth aspect, the first SDT configuration information corresponds to a first RB, the first RB corresponds to the first network slice, and the data of the first network slice is data of the first RB.

With reference to the fourth aspect, in some implementations of the fourth aspect, the first SDT configuration information includes an identifier of the first RB.

With reference to the fourth aspect, in some implementations of the fourth aspect, the transceiver unit is further configured to receive second indication information from the first network device. The second indication information indicates that the first SDT configuration information corresponds to the first RB.

With reference to the fourth aspect, in some implementations of the fourth aspect, the transceiver unit is further configured to receive second SDT configuration information from the first network device. The second SDT configuration information corresponds to a second RB, the second RB is different from the first RB, the second RB corresponds to the first network slice, and a resource indicated by the first SDT configuration information is different from that indicated by the second SDT configuration information.

With reference to the fourth aspect, in some implementations of the fourth aspect, the first SDT configuration information includes at least one of the following information: a data amount threshold, an RSRP threshold, a security parameter, a CG time domain resource, a CG frequency domain resource, a CG DMRS configuration, an identifier of a synchronization signal and PBCH block, search space or a control resource set, a preamble, a random access channel time-frequency resource, a PUSCH time-frequency resource of a random access message A, a PUSCH DMRS configuration of the random access message A, and an uplink carrier selection threshold.

With reference to the fourth aspect, in some implementations of the fourth aspect, the first SDT configuration information includes the data amount threshold, and the transceiver unit is specifically configured to: when a sum of data amounts of network slices corresponding to the first SDT configuration information is less than or equal to the data amount threshold, send the RRC resume request message and the data of the first network slice to the first network device. The network slice corresponding to the first SDT configuration information includes the first network slice.

With reference to the fourth aspect, in some implementations of the fourth aspect, the first SDT configuration information includes the RSRP threshold, and the transceiver unit is specifically configured to: when an RSRP of at least one synchronization signal and PBCH block corresponding to the first SDT configuration information is greater than or equal to the RSRP threshold, send the RRC resume request message and the data of the first network slice to the first network device.

With reference to the fourth aspect, in some implementations of the fourth aspect, the first SDT configuration information includes the security parameter, the security parameter includes an NCC, and the communication apparatus further includes a processing unit. The processing unit is configured to encrypt the data of the first network slice by using a key. The key is determined based on the NCC. The transceiver unit is specifically configured to send the RRC resume request message and encrypted data of the first network slice to the first network device.

With reference to the fourth aspect, in some implementations of the fourth aspect, the processing unit is further configured to resume a suspended RB corresponding to the first network slice or the first network slice group. The first network slice group includes the first network slice, and the suspended RB corresponds to the data of the first network slice.

With reference to the fourth aspect, in some implementations of the fourth aspect, the processing unit is further configured not to resume an RB corresponding to a third network slice or a third network slice group. The third network slice is different from the first network slice, and the third network slice group is different from the first network slice group.

With reference to the fourth aspect, in some implementations of the fourth aspect, the transceiver unit is further configured to send third indication information to the first network device. The third indication information indicates that data of the third network slice arrives, and the third indication information, the RRC resume request message, and the data of the first network slice are carried in a same message.

With reference to the fourth aspect, in some implementations of the fourth aspect, the first SDT configuration information is included in an RRC release message or a system message.

According to a fifth aspect, a communication apparatus is provided. The communication apparatus includes a transceiver unit and a processing unit. The transceiver unit is configured to send first SDT configuration information to a terminal device. The first SDT configuration information corresponds to a first network slice. The transceiver unit is further configured to receive an RRC resume request message and data from the terminal device. The processing unit is configured to determine, based on the first SDT configuration information, that the data is data of the first network slice.

With reference to the fifth aspect, in some implementations of the fifth aspect, the first SDT configuration information includes an identifier of the first network slice or an identifier of a first network slice group, and the first network slice group includes the first network slice.

With reference to the fifth aspect, in some implementations of the fifth aspect, the transceiver unit is further configured to send first indication information to the terminal device. The first indication information indicates that the first SDT configuration information corresponds to the first network slice or a first network slice group, and the first network slice group includes the first network slice.

With reference to the fifth aspect, in some implementations of the fifth aspect, the first SDT configuration information corresponds to a first RB, and the first RB corresponds to the first network slice. The processing unit is specifically configured to determine, based on the first SDT configuration information, that the data is data of the first RB.

With reference to the fifth aspect, in some implementations of the fifth aspect, the first SDT configuration information includes an identifier of the first RB.

With reference to the fifth aspect, in some implementations of the fifth aspect, the method further includes: sending second indication information to the terminal device. The second indication information indicates that the first SDT configuration information corresponds to the first RB.

With reference to the fifth aspect, in some implementations of the fifth aspect, the transceiver unit is further configured to send second SDT configuration information to the terminal device. The second SDT configuration information corresponds to a second RB, the second RB is different from the first RB, the second RB corresponds to the first network slice, and a resource indicated by the second SDT configuration information is different from that indicated by the first SDT configuration information.

With reference to the fifth aspect, in some implementations of the fifth aspect, the first SDT configuration information includes at least one of the following information: a data amount threshold, an RSRP threshold, a security parameter, a CG time domain resource, a CG frequency domain resource, a CG DMRS configuration, an identifier of a synchronization signal and PBCH block, search space or a control resource set, a preamble, a random access channel time-frequency resource, a PUSCH time-frequency resource, a PUSCH DMRS configuration, and an uplink carrier selection threshold.

With reference to the fifth aspect, in some implementations of the fifth aspect, the first SDT configuration information includes the security parameter, the security parameter includes an NCC, and the processing unit is further configured to decrypt the data of the first network slice by using a key. The key is determined based on the NCC.

With reference to the fifth aspect, in some implementations of the fifth aspect, the transceiver unit is further configured to send a request message to a second network device. The request message is used to request a context of the terminal device, and the request message includes assistance information of the first network slice. The transceiver unit is further configured to receive a response message from the second network device. The response message includes the context of the terminal device or a tunnel address for uplink data forwarding.

With reference to the fifth aspect, in some implementations of the fifth aspect, the assistance information of the first network slice includes one or more of the following: the identifier of the first network slice, first admission information, a data amount of the first network slice, and priority information of the first network slice. The first admission information indicates whether the communication apparatus can admit the first network slice.

With reference to the fifth aspect, in some implementations of the fifth aspect, the transceiver unit is further configured to receive third indication information from the terminal device. The third indication information indicates that data of a third network slice arrives. The request message further includes assistance information of the third network slice.

With reference to the fifth aspect, in some implementations of the fifth aspect, the assistance information of the third network slice includes one or more of the following: second admission information, the third indication information, an identifier of the third network slice, and priority information of the third network slice. The second admission information indicates whether the communication apparatus can admit the third network slice.

According to a sixth aspect, a communication apparatus is provided. The communication apparatus includes a transceiver unit and a processing unit. The transceiver unit is configured to receive a request message from a first network device. The request message is used to request a context of a terminal device, the request message includes assistance information of a first network slice, and the first network slice is a network slice for initiating SDT by the terminal device. The processing unit is configured to determine, based on the assistance information of the first network slice, whether to perform anchor relocation.

With reference to the sixth aspect, in some implementations of the sixth aspect, the assistance information of the first network slice includes one or more of the following: an identifier of the first network slice, first admission information, a data amount of the first network slice, and priority information of the first network slice. The first admission information indicates whether the first network device can admit the first network slice.

With reference to the sixth aspect, in some implementations of the sixth aspect, the request message further includes assistance information of a third network slice, the third network slice is a network slice in which data arrives at the terminal device, and the third network slice is different from the first network slice. The processing unit is specifically configured to determine, based on the assistance information of the first network slice and the assistance information of the third network slice, whether to perform anchor relocation.

With reference to the sixth aspect, in some implementations of the sixth aspect, the assistance information of the third network slice includes one or more of the following: second admission information, third indication information, an identifier of the third network slice, and priority information of the third network slice. The second admission information indicates whether the first network device can admit the third network slice, and the third indication information indicates that data of the third network slice arrives.

According to a seventh aspect, a communication apparatus is provided, and includes a processor. The processor is coupled to a memory, and may be configured to execute instructions in the memory, to implement the method according to any one of the possible implementations of the first aspect. Optionally, the communication apparatus further includes the memory. Optionally, the communication apparatus further includes a communication interface. The processor is coupled to the communication interface. The communication interface is configured to input and/or output information. The information includes at least one of instructions and data.

In an implementation, the communication apparatus is a terminal device. When the communication apparatus is the terminal device, the communication interface may be a transceiver or an input/output interface.

Optionally, the transceiver may be a transceiver circuit. Optionally, the input/output interface may be an input/output circuit.

In another implementation, the communication apparatus is a chip or a chip system configured in a terminal device. When the communication apparatus is the chip or the chip system configured in the terminal device, the communication interface may be an input/output interface, an interface circuit, an output circuit, an input circuit, a pin, a related circuit, or the like. The processor may alternatively be embodied as a processing circuit or a logic circuit.

According to an eighth aspect, a communication apparatus is provided, and includes a processor. The processor is coupled to a memory, and may be configured to execute instructions in the memory, to implement the method according to any one of the possible implementations of the second aspect. Optionally, the communication apparatus further includes the memory. Optionally, the communication apparatus further includes a communication interface. The processor is coupled to the communication interface. The communication interface is configured to input and/or output information. The information includes at least one of instructions and data.

In an implementation, the communication apparatus is a first network device. When the communication apparatus is the first network device, the communication interface may be a transceiver or an input/output interface.

Optionally, the transceiver may be a transceiver circuit. Optionally, the input/output interface may be an input/output circuit.

In another implementation, the communication apparatus is a chip or a chip system configured in the first network device. When the communication apparatus is the chip or the chip system configured in the first network device, the communication interface may be an input/output interface, an interface circuit, an output circuit, an input circuit, a pin, a related circuit, or the like. The processor may alternatively be embodied as a processing circuit or a logic circuit.

According to a ninth aspect, a communication apparatus is provided, and includes a processor. The processor is coupled to a memory, and may be configured to execute instructions in the memory, to implement the method according to any one of the possible implementations of the third aspect. Optionally, the communication apparatus further includes the memory. Optionally, the communication apparatus further includes a communication interface. The processor is coupled to the communication interface. The communication interface is configured to input and/or output information. The information includes at least one of instructions and data.

In an implementation, the communication apparatus is a second network device. When the communication apparatus is the second network device, the communication interface may be a transceiver or an input/output interface.

Optionally, the transceiver may be a transceiver circuit. Optionally, the input/output interface may be an input/output circuit.

In another implementation, the communication apparatus is a chip or a chip system configured in the second network device. When the communication apparatus is the chip or the chip system configured in the second network device, the communication interface may be an input/output interface, an interface circuit, an output circuit, an input circuit, a pin, a related circuit, or the like. The processor may alternatively be embodied as a processing circuit or a logic circuit.

According to a tenth aspect, a processor is provided, and includes an input circuit, an output circuit, and a processing circuit. The processing circuit is configured to receive a signal through the input circuit, and transmit a signal through the output circuit, so that the processor performs the method according to any one of the first aspect to the third aspect and the possible implementations of the first aspect to the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a processing apparatus is provided, and includes a communication interface and a processor. The communication interface is coupled to the processor. The communication interface is configured to input and/or output information. The information includes at least one of instructions and data. The processor is configured to execute a computer program, so that the processing apparatus performs the method according to any one of the first aspect to the third aspect and the possible implementations of the first aspect to the third aspect.

Optionally, there are one or more processors, and there are one or more memories.

According to a twelfth aspect, a processing apparatus is provided, and includes a processor and a memory. The processor is configured to read instructions stored in the memory, receive a signal by using a receiver, and transmit a signal by using a transmitter, so that the processing apparatus performs the method according to any one of the first aspect to the third aspect and the possible implementations of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that in a related information exchange process, for example, sending indication information may be a process of outputting the indication information from the processor, and receiving the indication information may be a process of inputting the received indication information to the processor. Specifically, the information output by the processor may be output to the transmitter, and the input information received by the processor may be from the receiver. The transmitter and the receiver may be collectively referred to as a transceiver.

The apparatus according to the eleventh aspect and the twelfth aspect may each be a chip, and the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. The memory may be integrated in the processor, may be located outside the processor, and exist independently.

According to a thirteenth aspect, a computer program product is provided. The computer program product includes a computer program (which may also be referred to as code or instructions). When the computer program is run, a computer is enabled to perform the method according to any one of the first aspect to the third aspect and the possible implementations of the first aspect to the third aspect.

According to a fourteenth aspect, a computer-readable medium is provided. The computer-readable medium stores a computer program (which may also be referred to as code or instructions). When the computer program is run on a computer, the computer is enabled to perform the method according to any one of the first aspect to the third aspect and the possible implementations of the first aspect to the third aspect.

According to a fifteenth aspect, a communication system is provided, and includes the terminal device and the first network device described above, or includes the terminal device, the first network device, and the second network device described above.

### BRIEF DESCRIPTION OF DRAWINGS

FIG. 1 is a schematic diagram of a network architecture according to an embodiment of this application;
FIG. 2 is a schematic diagram of another network architecture according to an embodiment of this application;
FIG. 3 is a schematic diagram of an application scenario of a technical solution according to an embodiment of this application;
FIG. 4 is a schematic flowchart of a communication method according to an embodiment of this application;
FIG. 5 is a schematic flowchart of a communication method according to another embodiment of this application;
FIG. 6 is a schematic block diagram of a communication apparatus according to an embodiment of this application;
FIG. 7 is a schematic block diagram of a communication apparatus according to another embodiment of this application; and
FIG. 8 is a schematic diagram of a chip system according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, and a new radio (new radio, NR) system. The technical solutions provided in this application may be further applied to a future communication system, for example, a 6th generation mobile communication system. Alternatively, the communication system may be a public land mobile network (public land mobile network, PLMN), a device-to-device (device-to-device, D2D) communication system, a machineto-machine (machine to machine, M2M) communication system, an internet of things (internet of things, IoT) communication system, or another communication system.

A terminal device (terminal equipment) in embodiments of this application may be an uncrewed aerial vehicle (unmanned aerial vehicle, UAV), an access terminal, a subscriber unit, a subscriber station, a mobile station, a mobile console, a relay station, a remote station, a remote terminal, a mobile device, a user terminal (user terminal), user equipment (user equipment, UE), a terminal (terminal), a wireless communication device, a user agent, or a user apparatus. Alternatively, the terminal device may be a cellular phone, a cordless phone, a session initiation protocol (session initiation protocol, SIP), a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved PLMN, a terminal device in future internet of vehicles, or the like. This is not limited in embodiments of this application.

By way of example, and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that dedicated to only one type of application and need to work with other devices such as smartphones, such as various smart bands or smart jewelry for monitoring physical signs.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things. In embodiments of this application, an IoT technology may implement massive connections, deep coverage, and terminal power saving by using, for example, a narrow band (narrow band, NB) technology.

In addition, in embodiments of this application, the terminal device may further include a sensor, for example, an intelligent printer, a train detector, or a gas station. Main functions include: collecting data (for some terminal devices), receiving control information and downlink data of an access network device, sending an electromagnetic wave, and transmitting uplink data to the access network device.

In embodiments of this application, an apparatus configured to implement a function of the terminal device may be a terminal device, or may be an apparatus that can support the terminal device in implementing the function, for example, a chip system, or a combined component or device that can implement the function of the terminal device. The apparatus may be installed in the terminal device. In embodiments of this application, the chip system may include a chip, or may include a chip and another discrete component. In the technical solutions provided in embodiments of this application, an example in which the apparatus configured to implement the function of the terminal device is the terminal device is used to describe the technical solutions provided in embodiments of this application.

In embodiments of this application, an access network device may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. Alternatively, the device may be a gNB or a transmission point (a TRP or a TP) in a 5G system such as an NR system; may be an antenna panel or a group of antenna panels (including a plurality of antenna panels) of a base station in a 5G system; or may be a network node, such as a baseband unit (BBU) or a distributed unit (distributed unit, DU), that constitutes a gNB or a transmission point.

In embodiments of this application, an apparatus configured to implement a function of the access network device may be an access network device, or may be an apparatus that can support the access network device in implementing the function, for example, a chip system, or a combined component or device that can implement the function of the access network device. The apparatus may be installed in the access network device. In the technical solutions provided in embodiments of this application, an example in which the apparatus configured to implement the function of the access network device is the access network device is used to describe the technical solutions provided in embodiments of this application.

An interface between the access network device and the terminal device may be a Uu interface (or referred to as an air interface). Certainly, in future communication, names of these interfaces may remain unchanged, or may be replaced with other names. This is not limited in this application. For example, communication between the access network device and the terminal device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include a PDCP layer, an RLC layer, a MAC layer, and a physical layer. In possible implementation, a service data adaptation protocol (service data adaptation protocol, SDAP) layer may be further included above the PDCP layer.

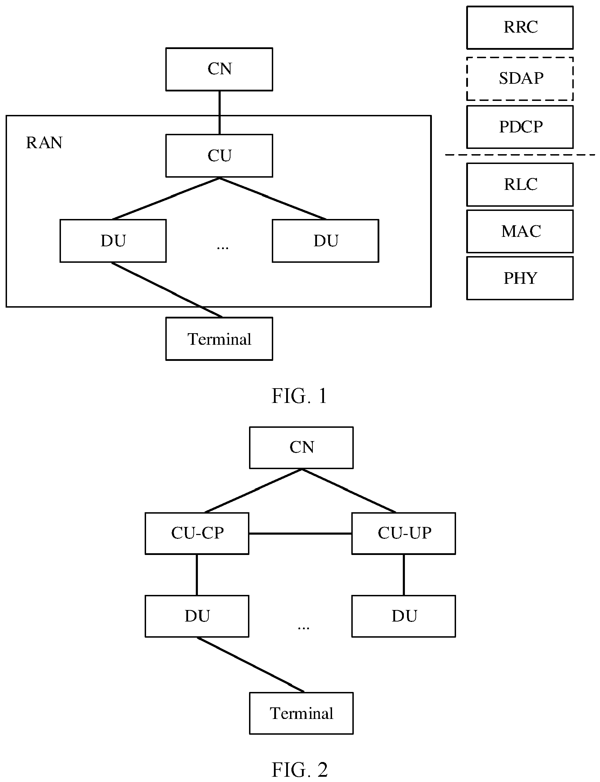

The access network device may implement functions of the protocol layers such as the RRC layer, the PDCP layer, the RLC layer, and the MAC layer through one node or a plurality of nodes. For example, in an evolved structure, the access network device may include one or more central units (centralized units, CUs) and one or more distributed units (distributed units, DUs), and a plurality of DUs may be centrally controlled by one CU. For example, an interface between the CU and the DU may be referred to as an F1 interface. A control plane (control panel, CP) interface may be an F1-C interface, and a user plane (user panel, UP) interface may be an F1-U interface. The CU and the DU may be divided based on protocol layers of a wireless network. For example, FIG. 1 is a schematic diagram of a network architecture according to an embodiment of this application.

It can be learned from FIG. 1 that functions of the PDCP layer and protocol layers above the PDCP layer are set on the CU, and functions of protocol layers below the PDCP layer (for example, an RLC layer and a MAC layer) are set on the DU.

It may be understood that, division of processing functions of the CU and the DU based on the protocol layers is merely an example, and the processing functions may alternatively be divided in another manner. For example, functions of the protocol layers above the RLC layer are set on the CU, and functions of the RLC layer and the protocol layers below the RLC layer are set on the DU. For another example, the CU or the DU may be further divided into functions having more protocol layers. For another example, the CU or the DU may be further divided into some processing functions having protocol layers. In a design, some functions of the RLC layer and functions of the protocol layers above the RLC layer are set on the CU, and remaining functions of the RLC layer and functions of the protocol layers below the RLC layer are set on the DU. In another design, division of functions of the CU or the DU may alternatively be performed based on service types or other system requirements. For example, division may be performed based on latencies. Functions whose processing time needs to satisfy a latency requirement are set on the DU, and functions whose processing time does not need to satisfy the latency requirement are set on the CU. In another design, the CU may alternatively have one or more functions of the core network. For example, the CU may be set on a network side for ease of centralized management; and the DU may have a plurality of radio frequency functions, or radio frequency functions may be set remotely. This is not limited in embodiments of this application.

For example, the functions of the CU may be implemented by one entity or different entities. For example, FIG. 2 is a schematic diagram of another network architecture according to an embodiment of this application. It can be learned from FIG. 2 that functions of the CU may be further divided. To be specific, a control plane and a user plane are separated and implemented by using different entities: a control plane CU entity (namely, a CU-CP entity) and a user plane CU entity (namely, a CU-UP entity). The CU-CP entity and the CU-UP entity may be coupled to the DU to jointly complete functions of the access network device. An interface between the CU-CP entity and the CU-UP entity may be an E1 interface, an interface between the CU-CP entity and the DU may be an F1-C interface, and an interface between the CU-UP entity and the DU may be an F 1-U interface. One DU and one CU-UP may be connected to one CU-CP. Under control of a same CU-CP, one DU may be connected to a plurality of CU-UPs, and one CU-UP may be connected to a plurality of DUs.

It should be noted that, in the architectures shown in FIG. 1 and FIG. 2, signaling generated by the CU may be sent to the terminal device by using the DU, or signaling generated by the terminal device may be sent to the CU by using the DU. The DU may transparently transmit the signaling to the terminal device or the CU by directly encapsulating the signaling at a protocol layer without parsing the signaling. In the following embodiments, if transmission of such signaling between the DU and the terminal device is included, sending or receiving of the signaling by the DU includes this scenario. For example, signaling at the RRC layer or the PDCP layer is finally processed as data at the physical layer and sent to the terminal device, or is converted from received data at the physical layer. In this architecture, it may also be considered that the signaling at the RRC layer or the PDCP layer is sent by the DU, or sent by the DU and a radio frequency apparatus.

It may be understood that the foregoing protocol layer division between the CU and the DU, and protocol layer division between the CU-CP and the CU-UP are merely examples, and there may be another division manner. This is not limited in embodiments of this application.

The access network device mentioned in embodiments of this application may be a device including a CU or a DU, a device including a CU and a DU, or a device including a control plane CU node (a CU-CP node), a user plane CU node (a CU-UP node), and a DU node.

In embodiments of this application, the access network device and the terminal device include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

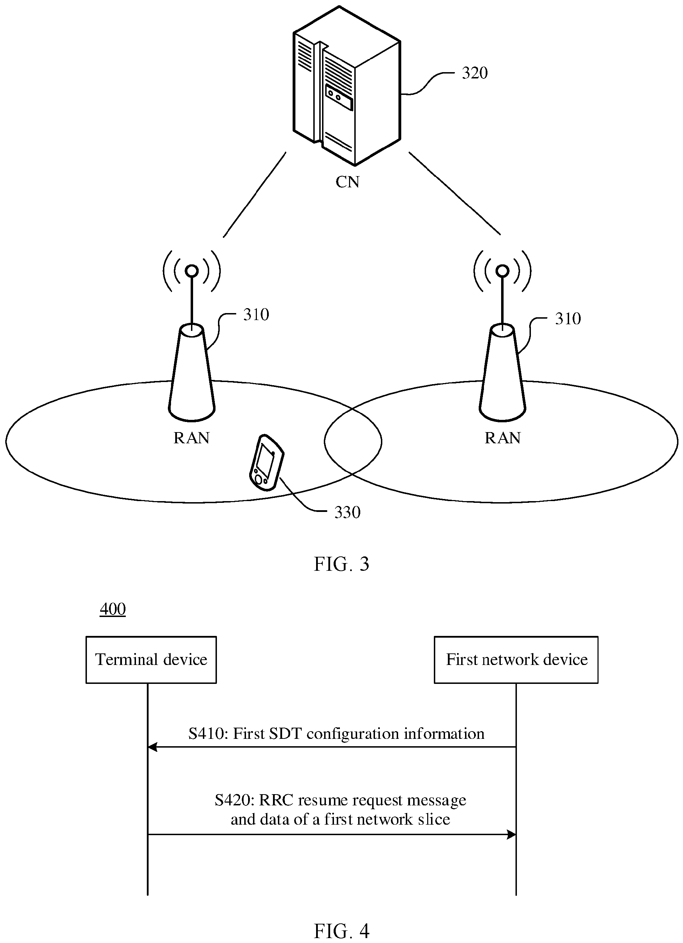

FIG. 3 is a schematic diagram of an application scenario of a technical solution according to an embodiment of this application. As shown in FIG. 3, a terminal device 330 accesses a wireless network, to obtain a service of an external network (for example, the internet) by using the wireless network, or communicate with another terminal device by using the wireless network. The wireless network includes a radio access network (radio access network, RAN) 310 and a core network (core network, CN) 320. The RAN 310 is configured to connect the terminal device 330 to the wireless network. The CN 320 is configured to manage the terminal device and provide a gateway for communicating with the external network.

It should be understood that the data transmission method provided in this application is applicable to a wireless communication system, for example, the wireless communication system 100 shown in FIG. 3. There is a wireless communication connection between two communication apparatuses in the wireless communication system. One of the two communication apparatuses may correspond to the terminal device 330 shown in FIG. 3, for example, may be the terminal device 330 in FIG. 3, or may be a chip configured in the terminal device 330. The other communication apparatus of the two communication apparatuses may correspond to the RAN 310 shown in FIG. 3, for example, may be the RAN 310 in FIG. 3, or may be a chip configured in the RAN 310.

For ease of understanding of embodiments of this application, several basic concepts in embodiments of this application are briefly described. It should be understood that basic concepts described below are briefly described by using a basic concept specified in an NR protocol as an example, but embodiments of this application are not limited to being applied only to an NR system. Therefore, standard names appearing when the NR system is used as an example for description are all functional descriptions, and specific names are not limited. The names indicate only functions of a device, and may be correspondingly extended to another system, for example, a 2nd generation (2nd generation, 2G), 3rd generation (3rd generation, 3G), 4th generation (4th generation, 4G), or future communication system.

### 1. RRC state

(1) A terminal device in a radio resource control connected (radio resource control connected, RRC CONNECTED) state means that an RRC connection is established between the terminal device and an access network device, and the access network device stores information of the terminal device (for example, one or more of access stratum context information and radio configuration information of the terminal device). The RRC connection is a dedicated connection such as a connection of a data radio bearer (data radio bearer, DRB) or a signaling radio bearer 1 (signal radio bearer, SRB1), and does not include a common connection of an SRBO.
(2) The terminal device in a radio resource control idle (radio resource control idle, RRC IDLE) state means that there is no RRC connection between the terminal device and the access network device, and the access network device does not store information of the terminal device.
(3) The terminal device in a radio resource control inactive (radio resource control inactive, RRC INACTIVE) state means that the terminal device moves in a radio access networkbased notification area (radio access network based notification area, RNA), and may not notify the access network device. The terminal device stores a context of the terminal device, and a last serving access network device (last serving gNB) stores the context of the terminal device, and is connected to a next generation (next generation, NG) of an access and mobility management function network element (access and mobility management function, AMF) and a user plane function (user plane function, UPF). In the RRC INACTIVE state, the dedicated RRC connection between the terminal device and the access network device is suspended, and may be subsequently resumed. For example, the terminal device resumes the RRC connection by initiating an RRC resume (resume) process. The terminal device may perform cell reselection in the RRC INACTIVE state.

### 2. Network slice (network slice)

With development of mobile communication technologies, various new services and application scenarios continuously emerge, and requirements of these services on network functions, connection performance, security, and the like are greatly different. If a single network is used to carry these services, it is difficult to meet requirements on high bandwidth, low latency, and high reliability. In addition, establishing a new network for each type of service brings huge costs. Therefore, 5G needs to be flexible and scalable to meet different service requirements. Therefore, in 5G, an end-to-end network slice is used to provide users with customized network services. Specifically, through flexible allocation of network resources (mainly referring to a CN domain (domain), a RAN domain, a management (management) domain, and an operator domain) and on-demand networking, a plurality of isolated logical networks with different characteristics are virtualized on one physical infrastructure in 5G, to provide users with customized network services.

Identifier of a network slice: Different logical subnets are identified and distinguished by using single network slice selection assistance information (single network slice assistance information, S-NSSAI). Each piece of S-NSSAI may include the following content: (1) a slice/service type (slice/service type, SST), indicating a specific feature and service type of a slice; (2) a slice differentiator (slice differentiator, SD), used as a supplement to the SST, and that may further distinguish a plurality of network slice instances satisfying a same SST.

3. Small data transmission (small data transmission, SDT): also referred to as early data transmission (early data transmission, EDT). For a UE in a non-connected state (that is, an RRC IDLE state or an RRC INACTIVE state), small data transmission (for example, automatic reporting of a water meter) may be performed in a simple signaling process, to avoid an RRC status change and RRC signaling overheads.

A manner in which the terminal device performs small data transmission includes configured grant (configured grant, CG)-SDT and random access (random access, RA)-SDT.

Currently, no network slice-based SDT solution is proposed, and requirements of different consumers cannot be met.

In view of this, this application provides a communication method, to implement network slice-based SDT, and meet requirements of different consumers.

The following describes in detail the method provided in embodiments of this application with reference to the accompanying drawings.

It should be understood that, for ease of understanding and description, the following describes in detail the method provided in embodiments of this application by using interaction between the terminal device and the network device as an example. However, this should not constitute a limitation on an execution body of the method provided in this application. For example, a terminal device shown in the following embodiments may be replaced with a component (such as a chip or a circuit) configured in the terminal device, and the network device shown in the following embodiments may be replaced with a component (such as a chip or a circuit) configured in the network device.

A specific structure of the execution body of the method provided in embodiments of this application are not particularly limited in the following embodiments, provided that a program that records code of the method provided in embodiments of this application can be run to perform communication according to the method provided in embodiments of this application. For example, the method provided in embodiments of this application may be performed by the terminal device or the network device, or a functional module that is in the terminal device or the network device and that can invoke and execute the program.

For ease of understanding embodiments of this application, the following descriptions are provided.

First, in this application, "indicate" may be understood as "enable". "Enable" may include direct enabling and indirect enabling. When a piece of information is described as being used to enable A, the information may directly enable A or indirectly enable A, but it does not necessarily indicate that the information carries A.

Information enabled by the information is referred to as to-be-enabled information. In a specific implementation process, there are a plurality of manners of enabling the to-be-enabled information, for example, but not limited to, a manner of directly enabling the to-be-enabled information. For example, the to-be-enabled information or an index of the to-be-enabled information is enabled. Alternatively, the to-be-enabled information may be indirectly enabled by enabling other information, and there is an association relationship between the other information and the to-be-enabled information. Alternatively, only a part of the to-be-enabled information may be enabled, and the other part of the to-be-enabled information may be known or pre-agreed on. For example, specific information may alternatively be enabled by using an arrangement sequence of a plurality of pieces of information that is pre-agreed on (for example, stipulated in a protocol), to reduce enabling overheads to some extent. In addition, a common part of all pieces of information may further be identified and enabled in a unified manner, to reduce enabling overheads caused by separately enabling same information.

Second, "first", "second", and various numerical numbers (for example, "#1" and "#2") shown in this application are merely for ease of description and are used to distinguish between objects, and are not intended to limit the scope of embodiments of this application. For example, the numerical numbers are used to distinguish between different information, and are not used to describe a particular order or sequence. It should be understood that objects described in this way are interchangeable in a proper circumstance, to describe a solution other than embodiments of this application.

Third, "storing" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited in this application.

Without loss of generality, the following describes in detail the communication method provided in embodiments of this application by using interaction between the terminal device and the network device as an example.

FIG. 4 is a schematic flowchart of a communication method according to an embodiment of this application. As shown in FIG. 4, the method 400 may include S410 and S420. The following describes in detail steps in the method 400.

S410: A first network device sends first SDT configuration information, where the first SDT configuration information corresponds to a first network slice. Correspondingly, in S410, the terminal device receives the first SDT configuration information.

The first network device is a network device that currently performs service. In other words, the terminal device is located in a coverage area of the first network device. The first network device may establish an RRC connection to the terminal device, or may not establish an RRC connection to the terminal device. This is not limited in this embodiment of this application.

The first SDT configuration information includes at least one of the following information: a data amount threshold #1, a reference signal received power (reference signal received power, RSRP) threshold #1, a security parameter #1, a CG time domain resource #1, a CG frequency domain resource #1, a CG demodulation reference signal (demodulation reference signal, DMRS) configuration #1, an identifier of a synchronization signal and physical broadcast channel block (synchronous signal and physical broadcast channel block, SSB) #1, search space (search space) #1 or a control resource set (control resource set, CORESET) #1, a preamble (preamble) #1, a random access channel time-frequency resource (random access channel occasions) #1, a physical uplink shared channel (physical uplink shared channel, PUSCH) time-frequency resource #1 of an RA message A (message A, MSGA), a PUSCH DMRS configuration #1 of the RA MSGA, and an uplink carrier selection threshold (uplink carrier selection threshold) #1.

The data amount threshold #1, the RSRP threshold #1, the security parameter #1, the identifier of the SSB #1, the search space #1 or the control resource set #1, and the uplink carrier selection threshold #1 may be used for CG-SDT and RA-SDT (including two-step (2 step) random access and four-step (4 step) random access).

The CG time domain resource #1, the CG frequency domain resource #1, and the CG DMRS configuration #1 are dedicated to CG-SDT. The CG DMRS configuration #1 may include a DMRS sequence and/or a DMRS port.

The preamble #1, the random access channel time-frequency resource #1, the PUSCH time-frequency resource #1 of the RAMSGA, and the PUSCH DMRS configuration #1 of the RA MSGA are dedicated to RA-SDT. The PUSCH time-frequency resource #1 of the RA MSGA is dedicated to two-step random access, and is a resource used to send a payload (payload) of the MSGA. The PUSCH DMRS configuration #1 of the RA MSGA is dedicated to two-step random access, and is a DMRS configuration used to send the MSGA. The preamble #1 and the random access channel time-frequency resource #1 may be used for two-step random access and four-step random access.

For example, if the terminal device is in an RRC connected state, the first network device may send the first SDT configuration information to the terminal device by using an RRC release (release) message. In other words, the first network device includes the first SDT configuration information in the RRC release message, and sends the RRC release message to the terminal device. For example, the RRC release message sent by the first network device to the terminal device includes a suspend (suspend) configuration, and the suspend configuration includes the first SDT configuration information. Correspondingly, after receiving the suspend configuration, the terminal device suspends the radio bearer (radio bearer, RB), and enters an RRC inactive state. The RB suspended by the terminal device includes all DRBs, an SRB1, and an SRB2, and an SRB0 is not considered.

If the terminal device is in a non-connected state, the first network device may send the first SDT configuration information to the terminal device by using a system message. The terminal device being in the non-connected state includes that the terminal device is in an RRC INACTIVE state or an RRC IDLE state.

A manner in which the first network device indicates that the first SDT configuration information corresponds to the first network slice is not limited in this embodiment of this application.

In an example, the first SDT configuration information sent by the first network device to the terminal device includes an identifier of the first network slice. Correspondingly, after receiving the first SDT configuration information, the terminal device may determine, based on the identifier of the first network slice included in the first SDT configuration information, that the first SDT configuration information corresponds to the first network slice.

Alternatively, the first SDT configuration information sent by the first network device to the terminal device includes an identifier of a first network slice group, and the first network slice group includes the first network slice. Correspondingly, after receiving the first SDT configuration information, the terminal device may determine, based on the identifier of the first network slice group included in the first SDT configuration information, that the first SDT configuration information corresponds to the first network slice group. Further, the terminal device determines that the first SDT configuration information corresponds to the first network slice included in the first network slice group. It should be understood that when the first SDT configuration information corresponds to the first network slice group, it may be considered that the first SDT configuration information corresponds to all network slices included in the first network slice group. It should be further understood that when the first SDT configuration information corresponds to the first network slice group, the first network device may send an identifier of a network slice included in the first network slice group to the terminal device, so that the terminal device determines network slices corresponding to the first SDT configuration information.

In another example, the first network device sends first indication information to the terminal device. The first indication information indicates that the first SDT configuration information corresponds to the first network slice. Correspondingly, after receiving the first indication information, the terminal device may determine that the first SDT configuration information corresponds to the first network slice.

For example, the first indication information includes an index of the first SDT configuration information and an identifier of the first network slice.

Alternatively, the first indication information indicates that the first SDT configuration information corresponds to the first network slice group, and the first network slice group includes the first network slice. Correspondingly, after receiving the first indication information, the terminal device may determine that the first SDT configuration information corresponds to the first network slice group. Further, the terminal device determines that the first SDT configuration information corresponds to the first network slice included in the first network slice group.

For example, the first indication information includes an index of the first SDT configuration information and an identifier of the first network slice group.

The first SDT configuration information and the first indication information may be carried in a same message and sent to the terminal device, or may be carried in different messages and sent to the terminal device. This is not limited in this embodiment of this application.

Optionally, the first SDT configuration information further corresponds to a second network slice or a second network slice group, and the second network slice does not belong to the first network slice group. In other words, the first SDT configuration information may correspond to a plurality of network slices, and the plurality of network slices do not belong to a same network slice group. Alternatively, the first SDT configuration information may correspond to a plurality of network slice groups. Alternatively, the first SDT configuration information may correspond to a network slice and a network slice group. For example, the first SDT configuration information corresponds to a first network slice and a second network slice group, and the first network slice does not belong to the second network slice group.

Further, the first SDT configuration information corresponds to a first RB. The first RB corresponds to the first network slice. The first RB is one or more of all RBs corresponding to the first network slice. For example, if the first network slice corresponds to an RB #1 to an RB #3, the first RB may be the RB #1, or the first RB is the RB #2, or the first RB is the RB #3, or the first RB is the RB #1 and the RB #2, or the first RB is the RB #1 and the RB #3, or the first RB is the RB #2 and the RB #3, or the first RB is the RB #1 to the RB #3.

A manner in which the first network device indicates that the first SDT configuration information corresponds to the first RB is not limited in this embodiment of this application.

In an example, the first SDT configuration information sent by the first network device to the terminal device includes an identifier of the first RB. Correspondingly, after receiving the first SDT configuration information, the terminal device may determine, based on the identifier of the first RB included in the first SDT configuration information, that the first SDT configuration information corresponds to the first RB.

Optionally, when the first SDT configuration information includes the identifier of the first RB, the first indication information may indicate a correspondence between the identifier of the first RB and the identifier of the first network slice. For example, the first indication information may include the identifier of the first RB and the identifier of the first network slice. Correspondingly, the terminal device determines, based on the identifier of the first RB included in the first SDT configuration information, that the first SDT configuration information corresponds to the first RB. Then, the terminal device determines, based on the correspondence between the identifier of the first RB and the identifier of the first network slice, that the first SDT configuration information corresponds to the first network slice.

In another example, the first network device sends second indication information to the terminal device. The second indication information indicates that the first SDT configuration information corresponds to the first RB. Correspondingly, after receiving the second indication information, the terminal device may determine that the first SDT configuration information corresponds to the first RB.

For example, the second indication information includes an index of the first SDT configuration information and an identifier of the first RB. Alternatively, the second indication information includes a correspondence between the identifier of the first RB and the identifier of the first network slice.

It should be understood that if the first network device does not indicate, to the terminal device, that the first SDT configuration information corresponds to the first RB, the terminal device may consider by default that the first SDT configuration information corresponds to all RBs corresponding to the first network slice. For example, the RB corresponding to the first network slice includes an RB #1 to an RB #3. When the first network device does not indicate, to the terminal device, that the first SDT configuration information corresponds to the first RB, the terminal device may consider by default that the first SDT configuration information corresponds to the RB #1 to the RB #3.

In conclusion, the first network device may indicate the first SDT configuration information, the correspondence between the first network slice, and the first RB to the terminal device in the following four manners.

Manner 1: The first SDT configuration information sent by the first network device to the terminal device includes an identifier of the first network slice and an identifier of the first RB.

Manner 2: The first SDT configuration information sent by the first network device to the terminal device includes an identifier of the first network slice, and the first network device sends the second indication information to the terminal device.

Manner 3: The first SDT configuration information sent by the first network device to the terminal device includes an identifier of the first RB, and the first network device sends the first indication information to the terminal device.

Manner 4: The first network device sends the first indication information and the second indication information to the terminal device.

Still further, the first SDT configuration information corresponds to a first quality of service (quality of service, QoS) flow (flow). The first QoS flow corresponds to the first RB, and the first QoS flow is one or more QoS flows in all QoS flows corresponding to the first RB. For example, if the first RB corresponds to a QoS flow #1 and a QoS flow #2, the first QoS flow may be the QoS flow #1, or the first QoS flow is the QoS flow #2, or the first QoS flow is the QoS flow #1 and the QoS flow #2.

A manner in which the first network device indicates that the first SDT configuration information corresponds to the first QoS flow is not limited in this embodiment of this application.

In an example, the first SDT configuration information sent by the first network device to the terminal device includes an identifier of the first QoS flow. Correspondingly, after receiving the first SDT configuration information, the terminal device may determine, based on the identifier of the first QoS flow included in the first SDT configuration information, that the first SDT configuration information corresponds to the first QoS flow.

In another example, the first network device sends fourth indication information to the terminal device. The fourth indication information indicates that the first SDT configuration information corresponds to the first QoS flow. Correspondingly, after receiving the fourth indication information, the terminal device may determine that the first SDT configuration information corresponds to the first QoS flow.

Optionally, the method 400 further includes: The first network device sends second SDT configuration information. Correspondingly, the terminal device receives the second SDT configuration information. The first network device may include the first SDT configuration information and the second SDT configuration information in a same message and send the same message to the terminal device, or may include the first SDT configuration information and the second SDT configuration information in different messages and send the different messages to the terminal device. This is not limited in this application.

The second SDT configuration information includes at least one of the following information: a data amount threshold #2, an RSRP threshold #2, a security parameter #2, a CG time domain resource #2, a CG frequency domain resource #2, a CG DMRS configuration #2, an identifier of an SSB #2, search space #2 or a control resource set #2, a preamble #2, a random access channel time-frequency resource #2, a PUSCH time-frequency resource #2 of an RA MSGA, a PUSCH DMRS configuration #2 of the RA MSGA, and an uplink carrier selection threshold #2.

The second SDT configuration information corresponds to a second RB, the second RB corresponds to the first network slice, and the second RB is different from the first RB. For example, if the first network slice corresponds to an RB #1 to an RB #3, and the first RB is the RB #1, the second RB is the RB #2 and/or the RB #3. Alternatively, the first RB is the RB #2, and the second RB is the RB #1 and/or the RB #3. Alternatively, the first RB is the RB #3, and the second RB is the RB #1 and/or the RB #2. Alternatively, the first RB is the RB #1 and the RB #2, and the second RB is the RB #3. Alternatively, the first RB is the RB #1 and the RB #3, and the second RB is the RB #2. Alternatively, the first RB is the RB #2 and the RB #3, and the second RB is the RB #1.

It may be understood that when the second RB corresponds to the first network slice, and the second SDT configuration information corresponds to the second RB, the second SDT configuration information also corresponds to the first network slice. For a manner in which the first network device indicates that the second SDT configuration information corresponds to the first network slice and the second RB, refer to a manner in which the first network device indicates that the first SDT configuration information corresponds to the first network slice and the first RB.

A resource indicated by the second SDT configuration information is different from that indicated by the first SDT configuration information. For example, the CG time domain resource #2 is different from the CG time domain resource #1 (for example, resource periods are different), and/or the CG frequency domain resource #2 is different from the CG frequency domain resource #1. For another example, the random access channel time-frequency resource #2 is different from the random access channel time-frequency resource #1, and/or the PUSCH time-frequency resource #2 of the RAMSGAis different from the PUSCH time-frequency resource #1 of the RA MSGA.

Optionally, in addition to a resource indicated by the second SDT configuration information being different from that indicated by the first SDT configuration information, other information included in the second SDT configuration information may also be different from that included in the first SDT configuration information. For example, the data amount threshold #1 is different from the data amount threshold #2, the RSRP threshold #1 is different from the RSRP threshold #2, the security parameter #1 is different from the security parameter #2, the SSB #1 is different from the SSB #2, the search space #1 is different from the search space #2, the control resource set #1 is different from the control resource set #2, the preamble #1 is different from the preamble #2, and/or the uplink carrier selection threshold #1 is different from the uplink carrier selection threshold #2.

Optionally, the method 400 further includes: The first network device sends third SDT configuration information. Correspondingly, the terminal device receives the third SDT configuration information. The first network device may include the first SDT configuration information and the third SDT configuration information in a same message and send the same message to the terminal device, or may include the first SDT configuration information and the third SDT configuration information in different messages and send the different messages to the terminal device. This is not limited in this application.

The third SDT configuration information includes at least one of the following information: a data amount threshold #3, an RSRP threshold #3, a security parameter #3, a CG time domain resource #3, a CG frequency domain resource #3, a CG DMRS configuration #3, an identifier of an SSB #3, search space #3 or a control resource set #3, a preamble #3, a random access channel time-frequency resource #3, a PUSCH time-frequency resource #3 of an RA MSGA, a PUSCH DMRS configuration #3 of the RA MSGA, and an uplink carrier selection threshold #3.

The third SDT configuration information corresponds to a third network slice or a third network slice group. The third network slice is different from the first network slice, and the third network slice group is different from the first network slice group. For a manner in which the first network device indicates that the third SDT configuration information corresponds to the third network slice or the third network slice group, refer to a manner in which the first network device indicates that the first SDT configuration information corresponds to the first network slice. For brevity, details are not described herein again.

A resource indicated by the third SDT configuration information is different from that indicated by the first SDT configuration information. Optionally, in addition to a resource indicated by the third SDT configuration information being different from that indicated by the first SDT configuration information, other information included in the third SDT configuration information may also be different from that included in the first SDT configuration information. Specifically, refer to the foregoing description of the relationship between the first SDT configuration information and the second SDT configuration information.

It should be understood that the first SDT configuration information, the second SDT configuration information, and the third SDT configuration information each are SDT configuration information dedicated to a network slice or a network slice group. If the first network device sends the first SDT configuration information, the second SDT configuration information, and the third SDT configuration information to the terminal device, resources indicated by any two pieces of the first SDT configuration information, the second SDT configuration information, and the third SDT configuration information are different.

Similarly, if the first network device sends a plurality of pieces of SDT configuration information to the terminal device, and the plurality of pieces of SDT configuration information corresponds to different network slices/RBs/network slice groups, resources indicated by any two pieces of the plurality of pieces of SDT configuration information are different. For example, the first network device sends SDT configuration information #1 to SDT configuration information #4 to the terminal device. The SDT configuration information #1 corresponds to a network slice #1, the SDT configuration information #2 corresponds to a network slice group #1, the SDT configuration information #3 corresponds to an RB #1 corresponding to a network slice #2, and the SDT configuration information #4 corresponds to an RB #2 corresponding to the network slice #2. In this case, resources indicated by any two pieces of the SDT configuration information #1 to the SDT configuration information #4 are different.

S420: The terminal device sends an RRC resume request (RRC resume request) message and data of the first network slice.

Specifically, the terminal device sends the RRC resume request message and the data of the first network slice to the first network device based on the first SDT configuration information.

Correspondingly, in S420, the first network device receives the RRC resume request message and the data of the first network slice. The first network device may determine, based on the first SDT configuration information, that the data received from the terminal device is the data of the first network slice. For example, if a resource used by the first network device to receive the data is the resource indicated by the first SDT configuration information, the first network device determines that the received data is the data of the first network slice.

It should be understood that in S420, an example in which the terminal device sends the data of the first network slice to the first network device based on the first SDT configuration information is used for description. In a specific implementation process, the terminal device may send, to the first network device based on the first SDT configuration information, the data of the network slice corresponding to the first SDT configuration information.

For example, if the first SDT configuration information corresponds to the first network slice group, in S420, the terminal device sends the RRC resume request message and the data of the first network slice group to the first network device. The first network slice group includes the first network slice, and the data of the first network slice group includes the data of the first network slice. Correspondingly, the first network device determines, based on the first SDT configuration information, that the data received from the terminal device is the data of the first network slice group. The data of the first network slice group includes data of one or more network slices in the first network slice group.

For another example, if the first SDT configuration information further corresponds to the second network slice or the second network slice group, in S420, the terminal device sends the RRC resume request message, the data of the first network slice, and data of the second network slice/second network slice group to the first network device. Correspondingly, the first network device may determine, based on the first SDT configuration information, that the data received from the terminal device is the data of the first network slice and the data of the second network slice/second network slice group.

For another example, if the first SDT configuration information corresponds to the first RB, in S420, the terminal device sends the RRC resume request message and data of the first RB to the first network device. The first RB corresponds to the first network slice. Correspondingly, the first network device determines, based on the first SDT configuration information, that the data received from the terminal device is the data of the first RB.

The RRC resume request message includes an identifier of the terminal device and a security verification parameter, to verify an identity of the terminal device. The identifier of the terminal device may be an inactive radio network temporary identifier (inactive radio network temporary identify, I-RNTI). The security verification parameter may be a short resume message authentication code for integrity (short resume message authentication code for integrity, short resume MAC-I).

The terminal device determines that the data of the first network slice arrives, and the terminal device determines to initiate an SDT process, for example, to send the data of the first network slice to the first network device. The terminal device resumes a suspended RB corresponding to the first network slice or the first network slice group. Specifically, the terminal device resumes the suspended RB corresponding to the data of the first network slice. For example, if suspended RBs corresponding to the first network slice or the first network slice group include an RB #1 to an RB #3, and suspended RBs corresponding to the data of the first network slice include the RB #1 and the RB #2, the terminal device resumes the RB #1 and the RB #2, and may not resume the RB #3. It may be understood that in S420, the terminal device does not resume a suspended RB corresponding to the third network slice or the third network slice group. The third network slice is different from the first network slice, and the third network slice group is different from the first network slice group. In other words, in the process of initiating the SDT, the terminal device resumes only the suspended RB corresponding to the network slice with data transmission, and does not resume the suspended RB corresponding to the network slice without data transmission.

As described above, the first SDT configuration information may include information in a plurality of possibilities. When the first SDT configuration information includes different information, the terminal device sends the RRC resume request message and the data of the first network slice to the first network device in different manners based on the first SDT configuration information.

In a possible implementation, the first SDT configuration information includes the data amount threshold #1. Correspondingly, when a sum of data amounts of network slices corresponding to the first SDT configuration information is less than or equal to the data amount threshold #1, the terminal device sends the RRC resume request message and the data of the first network slice to the first network device. It should be understood that the network slice corresponding to the first SDT configuration information includes the first network slice.

A sum of data amounts of network slices corresponding to the first SDT configuration information may be understood as a sum of data amounts of network slices that correspond to the first SDT configuration information and in which data arrives at the terminal device. For example, the first SDT configuration information corresponds to a network slice #1 (that is, the first network slice) to a network slice #3. If data of the network slice #1 and the network slice #2 arrives at the terminal device, and a sum of data amounts of the network slice #1 and the network slice #2 is less than or equal to the data amount threshold #1, the terminal device sends the data of the network slice #1 to the first network device. Optionally, the terminal device sends the data of the network slice #1 and the network slice #2 to the first network device.

In an example, the first SDT configuration information corresponds to the first network slice. Correspondingly, when a data amount of the first network slice is less than or equal to the data amount threshold #1, the terminal device sends the RRC resume request message and the data of the first network slice to the first network device.

In another example, the first SDT configuration information corresponds to the first network slice and the second network slice. Correspondingly, when a sum of data amounts of the first network slice and the second network slice is less than or equal to the data amount threshold #1, the terminal device sends the RRC resume request message and the data of the first network slice to the first network device. Optionally, the terminal device sends the RRC resume request message, the data of the first network slice, and the data of the second network slice to the first network device.

In this example, if only the data of the first network slice arrives at the terminal device, and the data amount of the first network slice is less than the data amount threshold #1, the terminal device sends the RRC resume request message and the data of the first network slice to the first network device.

In another example, the first SDT configuration information corresponds to the first network slice group. Correspondingly, when a data amount of the first network slice group is less than or equal to the data amount threshold #1, the terminal device sends the RRC resume request message and the data of the first network slice to the first network device. The data amount of the first network slice group is a sum of data amounts of network slices included in the first network slice group. Optionally, the terminal device sends the data of the first network slice group and the RRC resume request message to the first network device. The data of the first network slice group includes the data of the first network slice.

In this example, if only the data of the first network slice arrives at the terminal device, and the data amount of the first network slice is less than the data amount threshold #1, the terminal device sends the RRC resume request message and the data of the first network slice to the first network device.

In this implementation, if a sum of data amounts of network slices corresponding to the first SDT configuration information is greater than the data amount threshold #1, the terminal device sends the RRC resume request message by using a random access configuration dedicated to a non-network slice (non-slice). Further, after random access is completed, the terminal device sends the data of the first network slice to the first network device.

In another possible implementation, the first SDT configuration information includes the RSRP threshold #1. Correspondingly, when an RSRP of at least one SSB corresponding to the first SDT configuration information is greater than or equal to the RSRP threshold #1, the terminal device sends the RRC resume request message and the data of the first network slice to the first network device. It should be understood that the network slice corresponding to the first SDT configuration information includes the first network slice. The terminal device determines, based on the RSRP of the at least one SSB corresponding to the first SDT configuration information, whether to trigger an SDT process. In this way, network slices can be isolated in different SSBs, and requirements of different users are met.

The at least one SSB corresponding to the first SDT configuration information is an SSB corresponding to a network slice corresponding to the first SDT configuration information. For example, if the first SDT configuration information corresponds to the first network slice, the at least one SSB corresponding to the first SDT configuration information is an SSB corresponding to the first network slice. For another example, if the first SDT configuration information corresponds to the first network slice group, the at least one SSB corresponding to the first SDT configuration information is an SSB corresponding to the first network slice group. For another example, if the first SDT configuration information corresponds to the first network slice and the second network slice, the at least one SSB corresponding to the first SDT configuration information is an SSB corresponding to the first network slice and/or the second network slice.

Optionally, if the first SDT configuration information includes the identifier of the SSB #1, the at least one SSB may be the SSB #1.

In this implementation, if the RSRP of the at least one SSB corresponding to the first SDT configuration information is less than the RSRP threshold #1, the terminal device sends the RRC resume request message by using a random access configuration dedicated to a non-network slice. Further, after random access is completed, the terminal device sends the data of the first network slice to the first network device.

In still another possible implementation, the first SDT configuration information includes the data amount threshold #1 and the RSRP threshold #1. Correspondingly, when the following condition (1) and/or the condition (2) is met, the terminal device sends the RRC resume request message and the data of the first network slice to the first network device. Condition (1): A sum of data amounts of network slices corresponding to the first SDT configuration information is less than or equal to the data amount threshold #1. Condition (2): An RSRP of at least one SSB corresponding to the first SDT configuration information is greater than or equal to the RSRP threshold #1.

In still another possible implementation, the first SDT configuration information includes the security parameter #1, and the security parameter #1 includes a next hop chaining counter (next hop chaining counter, NCC). Correspondingly, the terminal device determines a key based on the NCC, and encrypts the data of the first network slice by using the key. Further, the terminal device sends the RRC resume request message and encrypted data of the first network slice to the first network device.

Correspondingly, after receiving the encrypted data of the first network slice, the first network device determines the key based on the NCC, and decrypts the data of the first network slice by using the key.

In still another possible implementation, the first SDT configuration information includes the CG time domain resource #1 and/or the CG frequency domain resource #1. Correspondingly, the terminal device sends the RRC resume request message and the data of the first network slice on the CG time domain resource #1 and/or the CG frequency domain resource #1.

In still another possible implementation, the first SDT configuration information includes the CG DMRS configuration #1. Correspondingly, the terminal device sends the RRC resume request message, the data of the first network slice, and the DMRS #1 to the first network device. The DMRS #1 is sent based on the CG DMRS configuration #1, and the DMRS #1 is used to demodulate the RRC resume request message and the data of the first network slice.

In still another possible implementation, the first SDT configuration information includes the uplink carrier selection threshold #1. Correspondingly, the terminal device selects, based on the uplink carrier selection threshold #1, an uplink carrier for sending the RRC resume request message and the data of the first network slice. It is assumed that a cell has a normal uplink carrier and a supplementary uplink carrier. When an RSRP of the cell is greater than the uplink carrier selection threshold #1, the terminal device selects the normal uplink carrier to send the RRC resume request message and the data of the first network slice. When the RSRP of the cell is less than or equal to the uplink carrier selection threshold #1, the terminal device selects the supplementary uplink carrier to send the RRC resume request message and the data of the first network slice.

In still another possible implementation, the first SDT configuration information includes the random access channel time-frequency resource #1 and the PUSCH time-frequency resource #1 of the RAMSGA. Correspondingly, the terminal device initiates the SDT through two-step random access. Specifically, the terminal device sends the random access preamble on the random access channel time-frequency resource #1, and sends the RRC resume request message and the data of the first network slice on the PUSCH time-frequency resource #1 of the RAMSGA.

It should be understood that the foregoing plurality of possible implementations may be implemented in combination. For example, the first SDT configuration information includes the CG time domain resource #1 and/or the CG frequency domain resource #1, and the CG DMRS configuration #1. Correspondingly, the terminal device sends the RRC resume request message, the data of the first network slice, and the DMRS #1 on the CG time domain resource #1 and/or the CG frequency domain resource #1. For another example, the first SDT configuration information includes the preamble #1, the random access channel time-frequency resource #1, and the uplink carrier selection threshold #1. Correspondingly, the terminal device selects the uplink carrier based on the uplink carrier selection threshold #1. After selecting the uplink carrier, the terminal device sends the preamble #1 on the random access channel time-frequency resource #1. Further, the terminal device receives a random access response of the first network device, and sends the RRC resume request message and the data of the first network slice to the first network device based on the random access response.

It should be further understood that, in addition to the first SDT configuration information, the first network device may further send common (common) SDT configuration information (for example, a non-slice dedicated SDT configuration) to the terminal device. The terminal device may obtain, from the common SDT configuration information, dedicated configuration information that is not included in the first SDT configuration information and that is used to initiate the SDT process of the first network slice. For example, if the first SDT configuration information does not include the data amount threshold #1, the terminal device may obtain the data amount threshold from the common SDT configuration information, and determine, based on the data amount threshold, whether to initiate the SDT process of the first network slice.

It should be noted that in S420, the terminal device does not send, to the first network device, data of a network slice that does not correspond to the first SDT configuration information. For example, if the third network slice does not correspond to the first SDT configuration, in S420, even if data of the third network slice arrives at the terminal device, the terminal device does not send the data of the third network slice to the first network device, and does not resume an RB corresponding to the third network slice.

Optionally, if data of the third network slice/third network slice group arrives at the terminal device before the SDT process of the first network slice ends, the method 400 further includes: The terminal device sends third indication information to the first network device. The third indication information indicates that the data of the third network slice/third network slice group arrives. The third network slice group includes the third network slice. The third network slice is different from the first network slice, and the third network slice group is different from the first network slice group. A flag indicating that the SDT process of the first network slice ends is that the terminal device receives an RRC release message from the first network device after sending the data of the first network slice to the first network device.

The third indication information, the RRC resume request message, and the data of the first network slice may be carried in a same message or different messages. The third indication information may be transmitted through a dedicated control channel (dedicated control channel, DCCH) or a MAC control element (MAC control element, MAC CE).

For example, if data of the third network slice/third network slice group arrives at the terminal device before S420, in S420, the terminal device sends the RRC resume request message, the data of the first network slice, and the third indication information to the first network device. In other words, the terminal device includes the RRC resume request message, the data of the first network slice, and the third indication information in a same message.

For another example, if data of the third network slice/third network slice group arrives at the terminal device after S420, after S420, the method 400 further includes: The terminal device sends third indication information to the first network device.

For example, in S420, after the terminal device sends the RRC resume request message and the data of the first network slice to the first network device, the terminal device receives an uplink scheduling message from the first network device. Further, the terminal device sends the third indication information to the first network device based on the uplink scheduling message. Optionally, if there is remaining data that is of the first network slice/first network slice group and that is to be transmitted by the terminal device, the terminal device sends the third indication information and the remaining data of the first network slice/first network slice group to the first network device based on the uplink scheduling message. When sending the third indication information and the remaining data of the first network slice/first network slice group to the first network device, the terminal device still does not send the data of the third network slice/third network slice group to the first network device, and does not resume the suspended RB corresponding to the third network slice/third network slice group.

Optionally, the third indication information further indicates a data amount of the third network slice. For example, if a value of the third indication information is "0", the third indication information indicates that no data of the third network slice arrives. If a value of the third indication information is "N", the third indication information indicates that the data amount of the third network slice is N, and N is a positive number.

Optionally, the method 400 may further include: The first network device sends a response message to the terminal device. Correspondingly, the terminal device receives the response message from the first network device.

The response message may be an RRC release message, an RRC resume message, an uplink scheduling message, a downlink scheduling message, a hybrid automatic repeat request (hybrid automatic repeat request, HARQ) acknowledgement (acknowledgement, ACK) message, or the like.

For example, after receiving the RRC resume message sent by the terminal device, the first network device may determine whether to enable the terminal device to enter an RRC CONNECTED state. If the first network device determines to enable the terminal device to enter the RRC CONNECTED state, the first network device sends the RRC resume message to the terminal device to resume an RRC connection. If the first network device determines to disable the terminal device from entering the RRC CONNECTED state, the first network device sends an RRC release message to the terminal device.

If the response message is an RRC release message, the RRC release message may include new first SDT configuration information, and the new first SDT configuration information indicates a next SDT configuration of the first network slice.

Optionally, if the first SDT configuration information includes the search space #1 or the control resource set #1, the first network device transmits downlink control information (downlink control information, DCI) of the response message in the search space #1 or on the control resource set #1.

Optionally, if the response message sent by the first network device to the terminal device is not an RRC release message, and there is remaining data that is of the first network slice/first network slice group and that is to be transmitted by the terminal device, the terminal device continues to send the remaining data of the first network slice/first network slice group to the first network device based on the first SDT configuration information.

Optionally, if the response message sent by the first network device to the terminal device is an RRC release message, and the RRC release message does not include the new first SDT configuration information, the terminal device continues to initiate a next SDT process of the first network slice based on the first SDT configuration information.

In this embodiment of this application, the first network device sends SDT configuration information (for example, the first SDT configuration information) at a granularity of the network slice to the terminal device, so that the terminal device can perform network slice-based SDT transmission (for example, send the data of the first network slice) based on the SDT configuration information at a granularity of the network slice. In this way, different service treatments can be provided for different users, requirements of different users are met, and user experience is improved.

As described above, the terminal device in the RRC INACTIVE state stores a context of the terminal device, and the last serving access network device also stores the context of the terminal device. If the terminal device moves from a coverage area of the last serving access network device to a coverage area of a new access network device, after receiving small data from the terminal device, the new access network device needs to obtain the context of the terminal device from the last serving access network device, to interpret the small data.

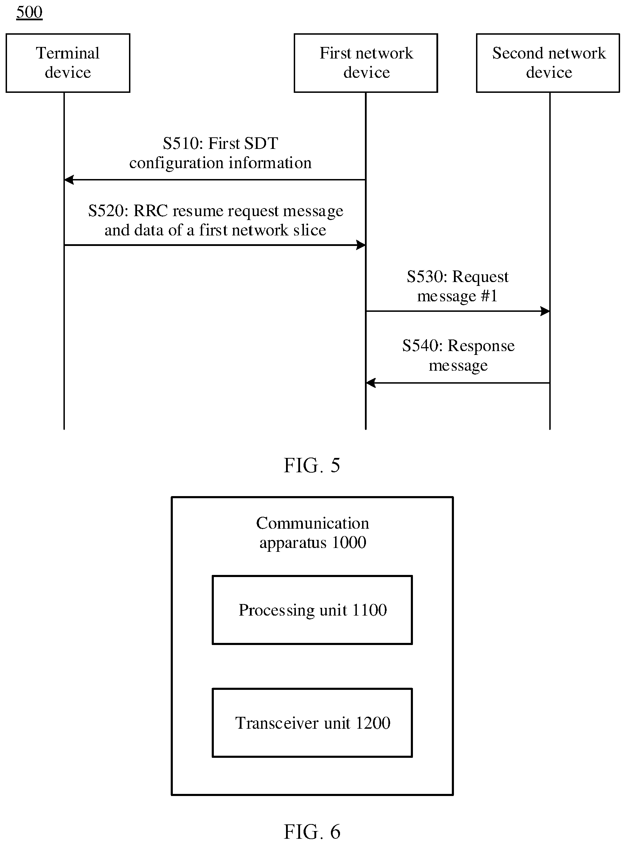

With reference to FIG. 5, the following describes a communication procedure between the new access network device and the last serving access network device in the network slice-based SDT transmission process. It should be noted that the first network device in FIG. 5 is a new access network device, and the second network device is a last access network device (an access network device that stores a context of the terminal device). As shown in FIG. 5, the method 500 may include S510 to S540. The following describes in detail steps in the method 500.

S510: The first network device sends first SDT configuration information, where the first SDT configuration information corresponds to a first network slice. Correspondingly, in S5 10, the terminal device receives the first SDT configuration information.

For details, refer to the description in S410.

S520: The terminal device sends an RRC resume request message and data of the first network slice. Correspondingly, in S520, the first network device receives the RRC resume request message and the data of the first network slice.

For details, refer to the description in S420.

S530: The first network device sends a request message #1. Correspondingly, in S530, the second network device receives the request message #1.

The second network device is a last serving network device, and the second network device stores a context of the terminal device. For example, the second network device is a network device that establishes an RRC connection to the terminal device before the terminal device enters a non-connected state.

The request message #1 is used to request the context of the terminal device, and the request message #1 includes assistance information of the first network slice. The assistance information of the first network slice includes one or more of the following: an identifier of the first network slice, first admission information, a data amount of the first network slice, and priority information of the first network slice. The first admission information indicates whether the first network device can admit the first network slice. For example, the request message #1 is a retrieve UE context request (retrieve UE context request) message.

As described in the method 400 above, the first SDT configuration information may correspond to a first network slice group, and the first network slice group includes the first network slice. When the first SDT configuration information corresponds to the first network slice, the assistance information of the first network slice includes one or more of the following: an identifier of the first network slice group, a data amount of the first network slice group, first admission information, and priority information of the first network slice group. The first admission information may indicate whether the first network device can admit the first network slice group. Optionally, if the first network device receives data amounts of a plurality of network slices in the first network slice group from the terminal device, the first network device may calculate the data amount of the first network slice group based on the received data amounts of the plurality of network slices in the first network slice group.

Optionally, if the first network device further receives third indication information from the terminal device in S520, and the third indication information indicates that data of the third network slice arrives, the request message #1 may further include assistance information of the third network slice. The assistance information of the third network slice includes one or more of the following: an identifier of the third network slice, second admission information, the third indication information, and priority information of the third network slice. The second admission information indicates whether the first network device can admit the third network slice.

For example, the priority information of the first network slice is whether a priority of the first network slice is higher than that of the third network slice. The priority information of the third network slice is whether a priority of the third network slice is higher than that of the first network slice.

Optionally, if the third indication information indicates that data of the third network slice group arrives, the assistance information of the third network slice includes one or more of the following: an identifier of the third network slice group, second admission information, the third indication information, and priority information of the third network slice group. The second admission information indicates whether the first network device can admit the third network slice group. The third network slice group includes the third network slice.

Optionally, as described in S420 above, the terminal device may send the third indication information to the first network device after S420. In other words, the first network device receives the third indication information after receiving the RRC resume request message and the data of the first network slice. In this case, after receiving the RRC resume request message and the data of the first network slice, the first network device sends the request message #1 to the second network device. Further, after receiving the third indication information, the first network device sends a request message #2 to the second network device. The request message #2 includes the assistance information of the third network slice.

S540: The second network device sends a response message. Correspondingly, in S540, the first network device receives the response message.

After receiving the request message #1 sent by the first network device, the second network device determines, based on the assistance information of the first network slice included in the request message #1, that an SDT process is initiated by the first network slice/first network slice group. For example, the second network device may determine, based on the identifier of the first network slice, that the SDT process is initiated by the first network slice. Alternatively, the second network device may determine, based on the identifier of the first network slice group, that the SDT process is initiated by the first network slice group.

Further, the second network device determines, based on the assistance information of the first network slice, whether to perform anchor relocation (anchor relocation).

For example, the assistance information of the first network slice includes the first admission information. Correspondingly, the second network device may determine, based on the first admission information, whether to perform anchor relocation. For example, if the first admission information indicates that the first network device can admit the first network slice/first network slice group, the second network device determines to perform anchor relocation. If the first admission information indicates that the first network device cannot admit the first network slice/first network slice group, the second network device determines not to perform anchor relocation.

For another example, the assistance information of the first network slice includes priority information of the first network slice/first network slice group. Correspondingly, the second network device determines, based on the priority information of the first network slice/first network slice group, whether to perform anchor relocation. For example, if a priority of the first network slice/first network slice group is higher (for example, higher than a preset threshold), the second network device determines to perform anchor relocation. If a priority of the first network slice/first network slice group is lower (for example, lower than the preset threshold), the second network device determines not to perform anchor relocation. Alternatively, if a priority of the first network slice/first network slice group is "high (high)", the second network device determines to perform anchor relocation. If a priority of the first network slice/first network slice group is "low (low)", the second network device determines not to perform anchor relocation.

For another example, the second network device determines, by default, to perform anchor relocation after receiving the request message #1.

For another example, the second network device determines, by default, not to perform anchor relocation after receiving the request message #1 from the first network device.

For another example, when the assistance information of the first network slice does not include the first admission information, the second network device does not perform anchor relocation by default.

Optionally, if the request message #1 further includes the assistance information of the third network slice, or the second network device receives the request message #2, the second network device may determine, based on the assistance information of the third network slice, that data of the third network slice/third network slice group arrives at the terminal device. For example, the second network device determines, based on the identifier of the third network slice, that data of the third network slice arrives at the terminal device. Alternatively, the second network device determines, based on the identifier of the third network slice group, that data of the third network slice group arrives at the terminal device. For another example, the second network device determines, based on the third indication information, that data of the third network slice/third network slice group arrives at the terminal device. For example, when the third indication information indicates that a data amount of the third network slice/third network slice group is not 0, the second network device determines that data of the third network slice/third network slice group arrives at the terminal device.

Further, when determining whether to perform anchor relocation, the second network device may further consider the assistance information of the third network slice.

For example, the assistance information of the first network slice includes the first admission information, and the assistance information of the third network slice includes the second admission information. Correspondingly, the second network device may determine, based on the first admission information and the second admission information, whether to perform anchor relocation. For example, if the first admission information indicates that the first network device can admit the first network slice/first network slice group, and the second admission information indicates that the first network device can admit the third network slice/third network slice group, the second network device determines that anchor relocation can be performed. Alternatively, if the first admission information indicates that the first network device can admit the first network slice/first network slice group, and the second admission information indicates that the first network device cannot admit the third network slice/third network slice group, the second network device determines that anchor relocation can be performed. Alternatively, if the first admission information indicates that the first network device cannot admit the first network slice/first network slice group, and the second admission information indicates that the first network device can admit the third network slice/third network slice group, the second network device determines that anchor relocation can be performed. If the first admission information indicates that the first network slice cannot admit the first network slice/first network slice group, and the second admission information indicates that the first network device cannot admit the third network slice/third network slice group, the second network device determines not to perform anchor relocation.

For another example, the assistance information of the first network slice does not include the first admission information, and the assistance information of the third network slice does not include the second admission information. Correspondingly, the second network device does not perform anchor relocation by default.

Further, if the second network device determines to perform anchor relocation, the response message sent by the second network device to the first network device includes the context of the terminal device. For example, the response message is a retrieve UE context response (retrieve UE context response) message.

If the second network device determines not to perform anchor relocation, the response message sent by the second network device to the first network device includes a tunnel address for uplink data forwarding. For example, the response message is a retrieve UE context failure (retrieve UE context failure) message. When determining not to perform anchor relocation, the second network device further sends an RLC configuration to the first network device, so that the first network device processes RLC data including the first network slice.

Correspondingly, after receiving the response message from the second network device, the first network device sends a response message (for example, an RRC release message) of the RRC resume request message to the terminal device.

If the response message received by the first network device includes the context of the terminal device, the first network device may determine whether to enable the terminal device to enter an RRC CONNECTED state. If the first network device determines to enable the terminal device to enter the RRC CONNECTED state, the first network device sends the RRC resume message to the terminal device to resume an RRC connection. If the first network device determines to disable the terminal device from entering the RRC CONNECTED state, the first network device sends an RRC release message to the terminal device.

If the response message received by the first network device is a retrieve UE context failure message, the first network device sends an RRC release message in the retrieve UE context failure message to the terminal device.

In this embodiment of this application, in a network slice-based SDT solution, an interaction procedure between two network devices is designed, to help implement network slice-based SDT.

The foregoing describes in detail the communication method provided in embodiments of this application with reference to FIG. 4 and FIG. 5. The following describes in detail a communication apparatus provided in embodiments of this application with reference to FIG. 6 to FIG. 8.

FIG. 6 is a schematic block diagram of a communication apparatus according to an embodiment of this application. As shown in FIG. 6, the communication apparatus 1000 may include a processing unit 1100 and a transceiver unit 1200.

In a possible design, the communication apparatus 1000 may correspond to the terminal device in the foregoing method embodiments. For example, the communication apparatus 1000 may be a terminal device, or a component (such as a chip or a chip system) configured in the terminal device.

It should be understood that the communication apparatus 1000 may correspond to the terminal device in the methods 400 to 500 in embodiments of this application, and the communication apparatus 1000 may include units configured to perform the method performed by the terminal device in the method 400 in FIG. 4 or the method 500 in FIG. 5. In addition, the units in the communication apparatus 1000 and the foregoing other operations and/or functions are separately intended to implement corresponding procedures of the method 400 in FIG. 4 or the method 500 in FIG. 5. It should be understood that a specific process in which each unit performs the foregoing corresponding steps is described in detail in the foregoing method embodiments. For brevity, details are not described herein.

It should be further understood that when the communication apparatus 1000 is the chip configured in the terminal device, the transceiver unit 1200 in the communication apparatus may be implemented by using an input/output interface. The processing unit 1100 in the communication apparatus 1000 may be implemented by using a processor, a microprocessor, an integrated circuit, or the like integrated in the chip or the chip system.

In another possible design, the communication apparatus 1000 may correspond to the network device in the foregoing method embodiments. For example, the communication apparatus 1000 may be a network device, or a component (for example, a chip or a chip system) configured in the network device.

It should be understood that the communication apparatus 1000 may correspond to the first network device in the methods 400 to 500 in embodiments of this application, and the communication apparatus 1000 may include units configured to perform the method performed by the first network device in the method 400 in FIG. 4 or the method 500 in FIG. 5. In addition, the units in the communication apparatus 1000 and the foregoing other operations and/or functions are separately intended to implement corresponding procedures of the method 400 in FIG. 4 or the method 500 in FIG. 5. It should be understood that a specific process in which each unit performs the foregoing corresponding steps is described in detail in the foregoing method embodiments. For brevity, details are not described herein.

It should be understood that the communication apparatus 1000 may correspond to the second network device in the method 500 in embodiments of this application, and the communication apparatus 1000 may include units configured to perform the method performed by the second network device in the method 500 in FIG. 5. In addition, the units in the communication apparatus 1000 and the foregoing other operations and/or functions are separately intended to implement corresponding procedures of the method 500 in FIG. 5. It should be understood that a specific process in which each unit performs the foregoing corresponding steps is described in detail in the foregoing method embodiments. For brevity, details are not described herein.

It should be further understood that when the communication apparatus 1000 is the chip configured in the network device, the transceiver unit 1200 in the communication apparatus may be implemented by using an input/output interface, and the processing unit 1100 in the communication apparatus 1000 may be implemented by using a processor, a microprocessor, an integrated circuit, or the like integrated in the chip or the chip system.

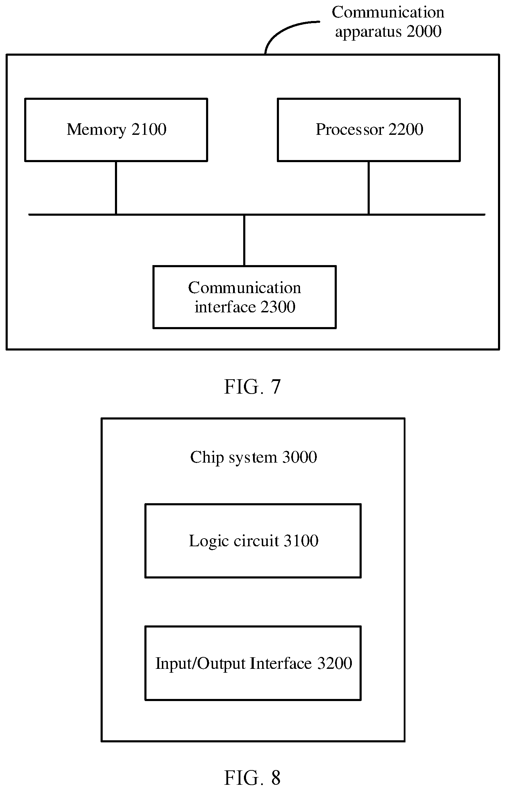

FIG. 7 is a schematic block diagram of a communication apparatus according to another embodiment of this application. The communication apparatus 2000 shown in FIG. 7 may include a memory 2100, a processor 2200, and a communication interface 2300. The memory 2100, the processor 2200, and the communication interface 2300 are connected by using an internal connection path. The memory 2100 is configured to store instructions. The processor 2200 is configured to execute the instructions stored in the memory 2100, to control an input/output interface to receive/send a packet. Optionally, the memory 2100 may be coupled to the processor 2200 by using an interface, or may be integrated with the processor 2200.

It should be noted that the communication interface 2300 uses a transceiver apparatus, for example, but not limited to a transceiver, to implement communication between the communication apparatus 2000 and another device or a communication network. The communication interface 2300 may further include an input/output interface (input/output interface).

In an implementation process, steps in the foregoing methods may be implemented by using a hardware integrated logical circuit in the processor 2200, or by using instructions in a form of software. The method of the communication disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 2100, and the processor 2200 reads information in the memory 2100 and completes the steps in the foregoing methods in combination with hardware of the processor 2200. To avoid repetition, details are not described herein again.

It should be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor, or the like.

It should also be understood that in embodiments of this application, the memory may include a read-only memory and a random access memory, and provide instructions and data to the processor. A part of the processor may further include a nonvolatile random access memory. For example, the processor may further store information of a device type.

FIG. 8 is a schematic diagram of a chip system according to an embodiment of this application. The chip system herein may also be a system including a circuit. The chip system 3000 shown in FIG. 8 includes a logic circuit 3100 and an input/output interface 3200. The logic circuit 3100 is configured to be coupled to the input interface, and transmit data (for example, first SDT configuration information) through the input/output interface, to perform the method in FIG. 4 or FIG. 5.

An embodiment of this application further provides a processing apparatus, including a processor and an interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated circuit (application specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another proper type.

According to the method provided in embodiments of this application, this application further provides a computer program product. The computer program product includes computer program code. When the computer program code is run on a computer, the computer is enabled to perform the method performed by the terminal device or the network device (the first network device and/or the second network device) in embodiments shown in FIG. 4 and FIG. 5.

According to the method provided in embodiments of this application, this application further provides a computer-readable storage medium. The computer-readable storage medium stores program code. When the program code is run on a computer, the computer is enabled to perform the method performed by the terminal device or the network device (the first network device and/or the second network device) in embodiments shown in FIG. 4 and FIG. 5.

According to the method provided in embodiments of this application, this application further provides a system, including the foregoing terminal device and network device (the first network device and/or the second network device).

The terminal device in the foregoing apparatus embodiments completely corresponds to the terminal device in the method embodiments, and the network device in the foregoing apparatus embodiments completely corresponds to the network device in the method embodiments. A corresponding module or unit performs a corresponding step. For example, the transceiver unit (the transceiver) performs a receiving or sending step in the method embodiments, and the processing unit (processor) may perform a step other than the sending or receiving step. For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application that runs on a computing device and the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as an internet interacting with other systems by using the signal).

A person of ordinary skill in the art may be aware that various illustrative logical blocks (illustrative logical block) and steps (step) described with reference to embodiments disclosed in this specification can be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connection may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve objectives of the solutions of the embodiments.

In addition, functional units in embodiments of this application may be integrated into one processing unit, or each of the units may exist alone physically, or two or more units are integrated into one unit.

In the foregoing embodiments, all or some of the functions of the functional units may be implemented by using software, hardware, firmware, or any combination thereof. When software is used to implement embodiments, embodiments may be implemented completely or partially in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid state disk, SSD)), or the like.

When the functions are implemented in the form of a software functional unit and sold or used as an independent product, the functions may be stored in a computer-readable storage medium. Based on such an understanding, the technical solutions of this application essentially, or the part making a contribution, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device, and the method comprises:
receiving first small data transmission SDT configuration information from a first network device, wherein the first SDT configuration information corresponds to a first network slice; and
sending a radio resource control RRC resume request message and data of the first network slice to the first network device based on the first SDT configuration information.

2. The method according to claim 1, wherein the first SDT configuration information comprises an identifier of the first network slice or an identifier of a first network slice group, and the first network slice group comprises the first network slice.

3. The method according to claim 1, wherein the method further comprises:
receiving first indication information from the first network device, wherein the first indication information indicates that the first SDT configuration information corresponds to the first network slice or a first network slice group, and the first network slice group comprises the first network slice.

4. The method according to any one of claims 1 to 3, wherein the first SDT configuration information corresponds to a first radio bearer RB, the first RB corresponds to the first network slice, and the data of the first network slice is data of the first RB.

5. The method according to claim 4, wherein the method further comprises:
receiving second SDT configuration information from the first network device, wherein the second SDT configuration information corresponds to a second RB, the second RB is different from the first RB, the second RB corresponds to the first network slice, and a resource indicated by the first SDT configuration information is different from that indicated by the second SDT configuration information.

6. The method according to any one of claims 1 to 5, wherein the first SDT configuration information comprises at least one of the following information: a data amount threshold, a reference signal received power RSRP threshold, a security parameter, a configured grant CG time domain resource, a CG frequency domain resource, a CG demodulation reference signal DMRS configuration, an identifier of a synchronization signal and physical broadcast channel PBCH block, search space or a control resource set, a preamble, a random access channel time-frequency resource, a physical uplink shared channel PUSCH time-frequency resource of a random access message A, a PUSCH DMRS configuration of the random access message A, and an uplink carrier selection threshold.

7. The method according to claim 6, wherein the first SDT configuration information comprises the data amount threshold, and the sending an RRC resume request message and data of the first network slice to the first network device based on the first SDT configuration information comprises:
when a sum of data amounts of network slices corresponding to the first SDT configuration information is less than or equal to the data amount threshold, sending the RRC resume request message and the data of the first network slice to the first network device, wherein the network slice corresponding to the first SDT configuration information comprises the first network slice.

8. The method according to claim 6 or 7, wherein the first SDT configuration information comprises the RSRP threshold, and the sending an RRC resume request message and data of the first network slice to the first network device based on the first SDT configuration information comprises:
when an RSRP of at least one synchronization signal and PBCH block corresponding to the first SDT configuration information is greater than or equal to the RSRP threshold, sending the RRC resume request message and the data of the first network slice to the first network device.

9. The method according to any one of claims 6 to 8, wherein the first SDT configuration information comprises the security parameter, the security parameter comprises a next hop chaining counter NCC, and the method further comprises:
encrypting the data of the first network slice by using a key, wherein the key is determined based on the NCC; and
the sending an RRC resume request message and data of the first network slice to the first network device based on the first SDT configuration information comprises:
sending the RRC resume request message and encrypted data of the first network slice to the first network device.

10. The method according to any one of claims 1 to 9, wherein the method further comprises:
resuming a suspended RB corresponding to the first network slice or the first network slice group, wherein the first network slice group comprises the first network slice, and the suspended RB corresponds to the data of the first network slice.

11. The method according to any one of claims 1 to 10, wherein the method further comprises:
sending third indication information to the first network device, wherein the third indication information indicates that data of a third network slice arrives, and the third indication information, the RRC resume request message, and the data of the first network slice are carried in a same message.

12. A communication method, wherein the method is applied to a first network device, and the method comprises:
sending first small data transmission SDT configuration information to a terminal device, wherein the first SDT configuration information corresponds to a first network slice;
receiving a radio resource control RRC resume request message and data from the terminal device; and
determining, based on the first SDT configuration information, that the data is data of the first network slice.

13. The method according to claim 12, wherein the first SDT configuration information comprises an identifier of the first network slice or an identifier of a first network slice group, and the first network slice group comprises the first network slice.

14. The method according to claim 12, wherein the method further comprises:
sending first indication information to the terminal device, wherein the first indication information indicates that the first SDT configuration information corresponds to the first network slice or a first network slice group, and the first network slice group comprises the first network slice.

15. The method according to any one of claims 12 to 14, wherein the first SDT configuration information corresponds to a first radio bearer RB, and the first RB corresponds to the first network slice; and
the determining, based on the first SDT configuration information, that the data is data of the first network slice comprises:
determining, based on the first SDT configuration information, that the data is data of the first RB.

16. The method according to claim 15, wherein the method further comprises:
sending second SDT configuration information to the terminal device, wherein the second SDT configuration information corresponds to a second RB, the second RB is different from the first RB, the second RB corresponds to the first network slice, and a resource indicated by the second SDT configuration information is different from that indicated by the first SDT configuration information.

17. The method according to any one of claims 12 to 16, wherein the first SDT configuration information comprises at least one of the following information: a data amount threshold, a reference signal received power RSRP threshold, a security parameter, a configured grant CG time domain resource, a CG frequency domain resource, a CG demodulation reference signal DMRS configuration, an identifier of a synchronization signal and physical broadcast channel PBCH block, search space or a control resource set, a preamble, a random access channel time-frequency resource, a physical uplink shared channel PUSCH time-frequency resource, a PUSCH DMRS configuration, and an uplink carrier selection threshold.

18. The method according to claim 17, wherein the first SDT configuration information comprises the security parameter, the security parameter comprises a next hop chaining counter NCC, and the method further comprises:
decrypting the data of the first network slice by using a key, wherein the key is determined based on the NCC.

19. The method according to any one of claims 12 to 18, wherein the method further comprises:
sending a request message to a second network device, wherein the request message is used to request a context of the terminal device, and the request message comprises assistance information of the first network slice; and
receiving a response message from the second network device, wherein the response message comprises the context of the terminal device or a tunnel address for uplink data forwarding.

20. The method according to claim 19, wherein the assistance information of the first network slice comprises one or more of the following: the identifier of the first network slice, first admission information, a data amount of the first network slice, and priority information of the first network slice; and the first admission information indicates whether the first network device can admit the first network slice.

21. The method according to claim 19 or 20, wherein the method further comprises:
receiving third indication information from the terminal device, wherein the third indication information indicates that data of a third network slice arrives; and
the request message further comprises assistance information of the third network slice.

22. The method according to claim 21, wherein the assistance information of the third network slice comprises one or more of the following: second admission information, the third indication information, an identifier of the third network slice, and priority information of the third network slice; and the second admission information indicates whether the first network device can admit the third network slice.

23. A communication method, wherein the method is applied to a second network device, and the method comprises:
receiving a request message from a first network device, wherein the request message is used to request a context of a terminal device, the request message comprises assistance information of a first network slice, and the first network slice is a network slice for initiating small data transmission SDT by the terminal device; and
determining, based on the assistance information of the first network slice, whether to perform anchor relocation.

24. The method according to claim 23, wherein the assistance information of the first network slice comprises one or more of the following: an identifier of the first network slice, first admission information, a data amount of the first network slice, and priority information of the first network slice; and the first admission information indicates whether the first network device can admit the first network slice.

25. The method according to claim 23 or 24, wherein the request message further comprises assistance information of a third network slice, the third network slice is a network slice in which data arrives at the terminal device, the third network slice is different from the first network slice, and the determining, based on the assistance information of the first network slice, whether to perform anchor relocation comprises:
determining, based on the assistance information of the first network slice and the assistance information of the third network slice, whether to perform anchor relocation.

26. The method according to claim 25, wherein the assistance information of the third network slice comprises one or more of the following: second admission information, third indication information, an identifier of the third network slice, and priority information of the third network slice; and the second admission information indicates whether the first network device can admit the third network slice, and the third indication information indicates that data of the third network slice arrives.

27. A communication apparatus, configured to implement the method according to any one of claims 1 to 26.

28. A communication apparatus, comprising:
a communication interface, configured to input and/or output information; and
a processor, configured to execute a computer program, to enable the apparatus to implement the method according to any one of claims 1 to 26.

29. A communication apparatus, comprising:
a memory, configured to store a computer program; and
a processor, configured to invoke the computer program in the memory and execute the computer program, to enable the apparatus to implement the method according to any one of claims 1 to 26.

30. A computer-readable storage medium, comprising a computer program, wherein when the computer program is run on a computer, the computer is enabled to perform the method according to any one of claims 1 to 26.
